# EUROPÄISCHE PATENTSCHRIFT

(11) **EP 3 627 324 B1**
(45) Veröffentlichungstag und Bekanntmachung des Hinweises auf die Patenterteilung: **27.10.2021**
(21) Anmeldenummer: 19205457.5
(22) Anmeldetag: 19.09.2017
(51) Int. Cl.: G06F 11/07, F02D 41/22, F02D 41/26, F02D 41/24, F02D 41/14

(54) **WATCHDOG ZUR ÜBERWACHUNG EINES PROZESSORS**
WATCHDOG FOR MONITORING A PROCESSOR
CHIEN DE GARDE PERMETTANT DE SURVEILLER UN PROCESSEUR

(30) Priorität: 19.09.2016 DE 102016117566; 19.09.2016 DE 102016117567; 19.09.2016 DE 102016117569; 19.09.2016 DE 102016117568; 19.09.2016 DE 102016117571
(43) Veröffentlichungstag der Anmeldung: 25.03.2020
(62) Teilanmeldung aus: 17776970.0
(73) Patentinhaber: Elmos Semiconductor SE, 44227 Dortmund (DE)
(72) Erfinder: Sudhaus, Andre, 44227 Dortmund (DE); Subijanto, Tan, 44227 Dortmund (DE)
(74) Vertreter: dompatent von Kreisler Selting Werner - Partnerschaft von Patent- und Rechtsanwälten mbB

(56) Entgegenhaltungen:
- EP-A2- 0 174 540
- WO-A1-2011/072662
- US-B1- 7 671 627

## Beschreibung

Die vorliegende Anmeldung nimmt die Prioritäten der deutschen Patentanmeldungen 10 2016 117 566.8 vom 19. September 2016, 10 2016 117 567.6 vom 19. September 2017, 10 2016 117 569.2 vom 19. September 2016, 10 2016 117 571.4 vom 19. September 2017 und 10 2016 117 568.4 vom 19. September 2017 in Anspruch.

Die Erfindung betrifft einen Watchdog zur Überwachung eines Prozessors. Der Watchdog wertet Antworten eines Prozessors aus und berücksichtigt dabei die historische Entwicklung dieser Antworten, und zwar insbesondere durch Mustererkennung. Insbesondere betrifft die Erfindung Verfahren zur Überwachung eines Prozessors mittels eines Watchdog insbesondere mit Musterkennung für wiederkehrende Lastsituationen, wobei das Verfahren entweder antwortempfangsgesteuert oder antwortempfangszeitraumgesteuert ist.

### Allgemeine Einleitung

Bei der Verwendung von Prozessoren zur Steuerung sicherheitsrelevanter Vorrichtungen in Fahrzeugen (wie z.B. einen Airbag) ist die Überwachung des bestimmungsgemäßen Programmablaufs von entscheidender Bedeutung für die Sicherheit der betreffenden Anwendungen. Hierzu sind unter dem Stichwort "Watchdog" zahlreiche Publikationen auffindbar. Die Aufgabe eines Watchdog ist es, das zeitliche Verhalten des Prozessors anhand von Merkmalen und Signalisierungen zu bewerten und ggf. den Prozessor durch geeignete Rücksignalisierungen zu Gegenmaßnahmen zu veranlassen, wenn sein Verhalten von den Erwartungen abweicht.

### Stand der Technik

Aus der DE-C- 10 056 408 ist ein solcher Watchdog bekannt. Diese Vorrichtung dient zur Überwachung eines Prozessors wobei der Watchdog bei wenigstens einem erkannten Fehler eine Fehlermeldung an den Prozessor überträgt und einen Fehlerzähler inkrementiert.

Dieses reine Inkrementieren hat den Nachteil, dass es für sich alleine nur für Systeme geeignet ist, die niemals einen Fehler zeigen dürfen. Komplexere Systeme benötigen aber eine Laststeuerung. Daher wird oft ein Aufwärts-/Abwärtszähler verwendet. Dieser hat aber den Nachteil, dass der Zähler integrierend und damit bei oszillierenden, aber trotzdem schlechten Ergebnissen wie ein Tiefpass wirkt. Solche oszillieren Ergebnisse liegen beispielsweise dann vor, wenn mehrfach hintereinander die Überprüfungsergebnisse mal gut und mal schlecht sind.

In DE-B-10 2006 028 992, DE-A-10 2004 009 359, DE-A-42 34 910 und US-A-4 594 685 sind weitere Watchdog-Konzepte beschrieben.

Aus WO-A-2011/072662 ist ein Verfahren zur Überwachung eines Prozessors mittels eines Watchdog bekannt, wobei der Watchdog einen Taktgeber, ein erstes Stimulierungsmittel zum Aussenden von Botschaften vom Watchdog an den Prozessor und ein erstes Bewertungsmittel zur Bewertung von Antworten des Prozessors aufweist, die dieser auf die Botschaften des Watchdog an diesen sendet. Ferner ist bei dem bekannten Verfahren vorgesehen, dass
- der Watchdog an den Prozessor Botschaften sendet, die den Prozessor selbst und weitere Systemkomponenten betreffen können,
- der Prozessor in Abhängigkeit von diesen Botschaften Antworten an den Watchdog sendet und
- der Watchdog mittels des ersten Bewertungsmittels die Antwort des Prozessors als "korrekt" oder "nicht korrekt" bewertet,
- wobei eine Antwort "korrekt" ist,
   - wenn deren Inhalt mit mindestens einem möglichen erwarteten Inhalt übereinstimmt und
   - wenn die Antwort innerhalb eines vorbestimmten Empfangszeitraums durch den Watchdog empfangen wird, und
- wobei eine Antwort "nicht korrekt" ist,
   - wenn der Inhalt der Antwort nicht mit mindestens einem möglichen erwarteten Inhalt übereinstimmt oder
   - wenn die Antwort nicht in dem vorbestimmten Empfangszeitraum durch den Watchdog empfangen wird.

Aus US-B-7671627 und EP-A-0174540 sind weitere Verfahren zur Überwachung eines Prozessors mittels eines Watchdog bekannt.

### Aufgabe der Erfindung

Der Erfindung liegt daher die Aufgabe zugrunde, eine Lösung zu schaffen die die obigen Nachteile des Stands der Technik nicht aufweist und weitere Vorteile aufweist.

Diese Aufgabe wird gelöst gemäß einer ersten Variante der Erfindung mittels eines Verfahrens zur Überwachung eines Prozessors nach Anspruch 1; vorteilhafte Ausgestaltungen dieser Variante sind Gegenstand der Ansprüche 2 bis 14.

### Lösung der erfindungsgemäßen Aufgabe

Bei der Erfindung handelt es sich um ein Verfahren zur Überwachung eines Prozessors (PC). Sie umfasst typischerweise einen Watchdog (WDG) mit einem Taktgeber (CTR) als Teil dieses Watchdog (WDG). Der Prozessor (PC) sollte mit dem Watchdog (WDG) zur Überwachung verbindbar sein. Der Taktgeber legt einen vorgesehenen Empfangszeitraum (b) fest, in dem der Watchdog (WDG) von dem Prozessor (PC) vorbestimmbare Antworten (ASW) auf von dem Watchdog (WDG) an den Prozessor (PC) gerichtete Fragen erwartet. Im Gegensatz zum Stand der Technik weist das erfindungsgemäße Verfahren in dem Watchdog (WDG) als Teil desselben nun einen Ergebnisspeicher (ES) auf, der vorzugsweise als Schieberegister (SR) gestaltet ist. Dieser Ergebnisspeicher umfasst nun vorzugsweise n Ergebnisspeicherzellen oder im Falle des Schieberegisters (SR) n Schieberegisterzellen. Hierbei ist n eine ganze positive Zahl größer 1. Bei diesen Schieberegisterzellen kann es sich um Speicherzellen handeln, die beispielsweise nur ein Bit pro Ergebnisspeicherzelle bzw. Schieberegisterzelle abspeichern können. Vorzugsweise werden jedoch mehr Informationen in einer Ergebnisspeicherzelle bzw. Schieberegisterzelle abgelegt. Eine Ergebnisspeicherzelle bzw. Schieberegisterzelle speichert also eine Datenstruktur, die im einfachsten Fall ein einzelnes Bit je Ergebnisspeicherzelle bzw. Schieberegisterzelle sein kann und in anderen Fällen komplexere Datenstrukturen umfassen kann. Dabei müssen nicht alle Informationsanteile der in diesen Datenstrukturen gespeicherten Informationen stets und immer benutzt werden. Wichtig ist jedoch, dass in der Datenstruktur der jeweiligen Ergebnisspeicherzelle bzw. Schieberegisterzelle stets ein Speicherplatz für einen ersten Informationsanteil vorgesehen ist, dessen Funktion später noch erläutert werden wird. In den n Ergebnisspeicherzellen bzw. n Schieberegisterzellen des Ergebnisspeichers (ES) bzw. des Schieberegisters (SR) befinden sich nun n zwischengespeicherten Informationen (Inf₁ bis Infₙ). Diese n zwischengespeicherten Informationen (Inf₁ bis Infₙ) haben jeweils die zuvor angesprochene Datenstruktur und umfassen jeweils zumindest den besagten ersten Informationsanteil. In dem Ergebnisspeicher (ES) bzw. dem Schieberegister (SR) sind diese n zwischengespeicherten Informationen (Inf₁ bis Infₙ) abgelegt. In den n Ergebnisspeicherzellen bzw. n Schieberegisterzellen des Ergebnisspeichers (ES) bzw. des Schieberegisters (SR) und damit auch die darin abgelegten n zwischengespeicherten Informationen (Inf₁ bis Infₙ) können nun von 1 bis n durchnummeriert werden. Dadurch erhält jede der n zwischengespeicherten Informationen (Inf₁ bis Infₙ) eine eindeutige Ergebnisspeicherposition von n möglichen Ergebnisspeicherpositionen, die von 1 bis n durchnummeriert sind, bzw. eine eindeutige Schieberegisterposition von n Schieberegisterpositionen, die von 1 bis n durchnummeriert sind. Wie bereits beschrieben weist jede der n zwischengespeicherten Informationen (Inf₁ bis Infₙ) zumindest einen ersten Informationsanteil auf und kann im Falle komplexerer Datenstrukturen ggf. weitere Informationsanteile aufweisen. Der Watchdog weist erste Stimulierungsmittel (QSTM) auf, die zur Aussendung von Botschaften (MSG) vom Watchdog (WDG) an den Prozessor (PC) verwendet werden können. Hierbei kann es sich beispielsweise um einfache Leitungen, die auf verschiedene Potenziale gelegt werden können, oder kompliziertere serielle Bussystem handeln. Der Watchdog (WDG) bewertet mit Hilfe erster Bewertungsmittel (AVAL), die vorzugsweise Teil des Watchdog (WDG) sind, Antworten (ANS) des Prozessors (PC) an den Watchdog (WDG) auf dessen Fragen an den Prozessor (PC). Der Watchdog (WDG) sendet dabei Botschaften (MSG) an den Prozessor (PC) die sowohl den Prozessor (PC) selbst, Teile desselben und weitere Systemkomponenten (SC) betreffen können. Der Prozessor (PC), die betroffenen Teile des Prozessors (PC) und/oder die weiteren Systemkomponenten führen daraufhin beispielsweise vorbestimmbare Tests mit zu erwartenden Ergebnissen durch. Hierbei kann es sich in einfachen Fällen beispielsweise um die Ermittlung von Programmzählerständen oder ähnlichem handeln. Der Prozessor (PC) sendet dann sein Ergebnis an den Watchdog (WDG). Dieses Ergebnis hängt also von zumindest einer zuvor empfangenen Botschaft (MSG) ab. Es ist auch denkbar, dass mehrere Botschaften (MSG) den Inhalt der Antwort (ANS) des Prozessors (PC) an den Watchdog (WDG) bestimmen oder mehrere Antworten (ANS) aufgrund einer oder mehrerer empfangener Botschaften (MSG) an den Watchdog /WDG) gesendet werden. Bei der Versendung der Antworten (ANS) durch den Prozessor (PC) bestimmen die Botschaften (MSG) jedoch nicht nur den Inhalt, sondern auch den Zeitpunkt. Die Antworten (ANS) werden in einem dafür vorgesehenen Empfangszeitraum (b) durch den Watchdog (WDG) erwartet. Im Gegensatz dazu gibt es auch einen Zeitraum (a) oder Zeitpunkt, in dem bzw. zu dem kein Empfang von Antworten (ANS) vorgesehen ist. Vorzugsweise wechselt sich dieser Zeitraum (a) mit dem vorgesehenen Empfangszeitraum (b) zyklisch ab. Darüber hinaus sind noch Zeitpunkte/Zeiträume (c) denkbar, zu bzw. in denen keine Bewertung von Antworten erfolgt. Zyklisch bedeutet hier nicht, dass die zeitliche Länge dieser Zeiträume in ihrer Gesamtheit oder einzeln immer gleich sein muss. Vielmehr kann sie variieren. Auch kann die Reihenfolge der Zeiträume (a, b, c) variieren. Ein Zyklus umfasst mindestens einen der Zeiträume (a, b, c). Empfängt nun der Watchdog (WDG) eine Antwort (ANS) vom Prozessor (PC) so bewertet der Watchdog (WDG) mittels der ersten Bewertungsmittel (AVAL) die Antwort (ANS) des Prozessors (PC) als "korrekt" oder "nicht korrekt". Eine Antwort (ANS) ist dann "korrekt" wenn deren Inhalt korrekt ist, also einem Element einer erlaubten Menge von Inhalten entspricht, die vorberechnet werden kann oder vorausberechnet ist. Gleichzeitig muss für die Bewertung als "korrekt" durch die ersten Bewertungsmittel (AVAL) die Antwort (ANS) innerhalb des für diese Antwort (ANS) vorbestimmten Empfangszeitraums (b) durch den Watchdog (WDG) empfangen werden. Andererseits bewerten die ersten Bewertungsmittel (AVAL) des Watchdog (WDG) die Antwort (ANS) als "nicht korrekt", wenn der Inhalt der Antwort (ANS) "nicht korrekt" ist, also wenn deren Inhalt keinem Element der erlaubten, vorausberechneten Menge von Inhalten zu dem Empfangszeitpunkt entspricht. Es kann also vorgegebene Erwartungszeiträume (b) geben, die von der erwarteten Antwort (ANS) abhängen und sich ggf. auch überlappen können. Die ersten Bewertungsmittel (AVAL) des Watchdog (WDG) bewerten die Antwort (ANS) ebenfalls als "nicht korrekt", wenn die Antwort (ANS) nicht innerhalb des für diese Antwort (ANS) vorbestimmten Empfangszeitraums (b) durch den Watchdog (WDG) empfangen werden, sondern in einem Zeitraum (a) zu dem kein Empfang von Antworten (ANS) vorgesehen ist.

Sofern es sich bei dem Empfangsspeicher (ES) beispielsweise um ein Schieberegister (SR) handelt, wird in einer ersten grundlegenden Ausprägung der Erfindung bei jedem Empfang einer Antwort (ANS) des Prozessors (PC) oder in einer zweiten grundlegenden Ausprägung der Erfindung zeitlich nach dem Empfang einer Antwort (ASW) durch dem Watchdog (WDG) oder zeitlich nach dem Ende des vorgesehenen Empfangszeitraums (b) die n-te zwischengespeicherte Information (Infₙ) aus dem Schieberegister (SR) gelöscht und jede der (n-1) zwischengespeicherten Informationen von der jeweiligen j-ten Schieberegisterposition (pⱼ, mit 1≤j≤(n-1)) auf die (j+1)-te Schieberegisterposition (pⱼ, mit 2≤j≤n) verschoben. Die dann frei gewordene erste Schieberegisterposition (p₁) füllt das Schieberegister (SR) dann zumindest mit dem Ergebnis der Bewertung der empfangenen Antwort (ANS) durch den Prozessor (PC) als neuen ersten Informationsanteil der neuen 1-ten zwischengespeicherten Information (Inf₁). Dieser erste Informationsanteil der 1-ten zwischengespeicherten Information (Inf₁) entspricht dann dem logischen Wert "korrekt" oder "nicht korrekt" je nach Ergebnis der vorausgegangenen Bewertung.

Es kann sich aber auch um eine allgemeinere Form eines Ergebnisspeichers (ES) handeln. Der Ergebnisspeicher (ES) löscht zeitlich nach jedem Empfang einer Antwort (ANS) des Prozessors (PC) durch dem Watchdog (WDG) oder zeitlich nach dem Ende des vorgesehenen Empfangszeitraums (b) zumindest eine zwischengespeicherte Information (z.B. Infₙ) aus einer Ergebnisspeicherzelle des Ergebnisspeichers (ES). Gleichzeitig oder in Zusammenhang damit verschiebt der Ergebnisspeicher (ES) die verbleibenden (n-1) nicht gelöschten, zwischengespeicherten Informationen von den ursprünglichen zugeordneten logischen Ergebnisspeicherpositionen auf andere logische Ergebnisspeicherpositionen. Dies kann zum einen durch echte Verschiebung der Informationsdaten in andere physikalische Ergebnisspeicherzellen des Ergebnisspeichers geschehen oder viel einfacher durch Neuzuordnung der logischen Ergebnisspeicherpositionen zu den physikalischen Ergebnisspeicherpositionen und damit zu den Ergebnisspeicherzellen. Im einfachsten Fall wird nur ein Schreibzeiger verwendet, der festlegt, welche der Ergebnisspeicherzellen als nächstes gelöscht werden soll. Eine der Ergebnisspeicherzellen enthält dann nur den Löschwert. In diese Ergebnisspeicherzelle wird dann die neue Information (z.B. Inf₁) geschrieben. Dieser Schreibvorgang kann gleichzeitig den Löschvorgang der bisherigen Information dieser Ergebnisspeicherzelle darstellen. Zumindest wird der erste Informationsanteil der Information in der betreffenden Ergebnisspeicherzelle festgelegt. Als zumindest neuen ersten Anteil der neuen zwischengespeicherten Information (z.B. Inf₁) auf der betreffenden Ergebnisspeicherposition, in die keine der verbleibenden (n-1) zwischengespeicherten Informationen verschoben wurde, wird dann vorzugsweise zumindest das Ergebnis der Bewertung der empfangenen Antwort (ANS) durch den Prozessor (PC) entsprechend einem logischen Wert für "korrekt" oder für "nicht korrekt" verwendet.

Der erfindungsgemäße Watchdog führt also ein Verfahren zur Überwachung eines Prozessors (PC) aus. Ein Taktgeber (CTR) gibt einen vorgesehener Empfangszeitraum (b) für eine Antwort (ANS) des Prozessors (PC) an den Watchdog (WDG) vor. Der Watchdog (WDG) versendet an den Prozessor (PC) eine oder mehrere Botschaften (MSG) mit Inhalten, die den Prozessor (PC) selbst, Teile desselben und/oder weitere Systemkomponenten (SC) betreffen können. Dieser beantwortet die Botschaft (MSG) bzw. die Botschaften (MSG) in Abhängigkeit von zumindest dem Inhalt einer dieser Botschaften (MSG) in Form zumindest der besagten Antwort (ASW) an den Watchdog (WDG). Der Watchdog bewertet zwecks Erzeugung eines Bewertungsergebnisses mindestens eine Antwort (ANS) des Prozessors (PC) als "korrekt" oder "nicht korrekt".

Bei dem Verfahren wird nun der Inhalt des Ergebnisspeichers (ES) zeitlich nach dem Empfang einer Antwort (ASW) durch dem Watchdog (WDG) oder zeitlich nach dem Ende des vorgesehenen Empfangszeitraums (b) modifiziert. Wie zuvor erläutert, weist der Ergebnisspeicher (ES) n Ergebnisspeicherzellen mit n zwischengespeicherten Informationen (Inf₁ bis Infₙ) auf. Dabei ist n wieder eine ganze Zahl größer 1. Jede Ergebnisspeicherzelle hat jeweils eine eindeutige logischen Ergebnisspeicherposition und eine zugeordnete eindeutige physikalische Ergebnisspeicherposition, die nicht identisch sein müssen.

Die Modifikation des Inhalts des Ergebnisspeichers (ES) erfolgt dabei durch Löschung mindestens einer zwischengespeicherten Information (Infₖ) der n zwischengespeicherten Informationen (Inf₁ bis Infₙ) in einer zugeordneten Ergebnisspeicherzelle (hier beispielhaft der k-ten Ergebnisspeicherzelle). Des Weiteren erfolgt eine Änderung mindestens einer logischen Ergebnisspeicherposition mindestens einer zwischengespeicherten Information (Infⱼ) der n zwischengespeicherten Informationen (Inf₁ bis Infₙ) in dem Ergebnisspeicher (ES). Dies kann durch echtes Verschieben der mindestens einen zwischengespeicherten Information (Infⱼ) innerhalb des Ergebnisspeichers (ES) erfolgen oder auch durch eine Änderung der Adressierung. In diesem letzten Fall werden nicht Inhalte verschoben, sondern die den jeweiligen Ergebnisspeicherzellen und damit den jeweiligen zwischengespeicherten Informationen (Inf₁ bis Infₙ) zugeordneten logischen Ergebnisspeicherpositionen geändert. Das Ergebnisses der Bewertung der mindestens einen empfangenen Antwort (ANS) wird dann durch den Watchdog (WDG) als neuer erster Informationsanteil einer neuen zwischengespeicherten Information (Inf₁) in dem Ergebnisspeicher abgelegt und verwendet. Als einfachen Fall kann man sich also einen Schreibzeiger vorstellen, der stets auf eine Ergebnisspeicherposition zeigt. Zeitlich nach dem Empfang einer Antwort (ASW) durch den Watchdog (WDG) oder zeitlich nach dem Ende des vorgesehenen Empfangszeitraums (b) oder zeitlich nach dem Empfang einer einzelnen Antwort (ASW) überschreibt der Watchdog (WDG) den ersten Informationsanteil der zwischengespeicherten Information (Infₖ) an der entsprechenden Ergebnisspeicherposition mit dem Ergebnis der Bewertung der mindestens einen empfangenen Antwort (ANS) und springt mit dem Schreibzeiger zur vorbestimmten nächsten Ergebnisspeicherzelle. Der Empfang einer Antwort (ASW) durch den Watchdog (WDG) oder der Empfang jeder Antwort (ASW) durch den Watchdog (WDG) oder das Ende des vorgesehenen Empfangszeitraums (b) stellen also ein Trigger-Ereignis für den Ergebnisspeicher (ES) dar. Der Algorithmus für das Berechnen der nächsten Schreibzeigerposition der nächsten Ergebnisspeicherzelle des Ergebnisspeichers (ES) wird dabei vorzugsweise so ausgelegt, dass der Schreibzeiger vor einer Wiederholung der Schreibzeigerpositionierung einmal auf die Ergebnisspeicherpositionen vorzugsweise aller Ergebnisspeicherzellen des Ergebnisspeichers gezeigt hat.

Gemäß einem ersten Aspekt der Erfindung wird pro Reaktion des Prozessors (PC) auf eine Botschaft des Watchdog (WDG) hin eine Bewertung vorgenommen und im Ergebnisspeicher abgelegt. Dabei kann eine Reaktion eine Antwort oder das Ausbleiben einer Antwort bedeuten.

Gemäß einem zweiten Aspekt der Erfindung wird eine Bewertung erst nach Ablauf eines vorgegebenen Reaktionszeitraums vorgenommen, innerhalb dessen mehrere Reaktionen (d.h. z.B. Antworten oder das Ausbleiben von Antworten) seitens des Prozessors (PC) auf eine oder mehrere Botschaften des Watchdog (WDG) hin) erwartet werden.

In beiden Fällen kann eine erwartete Reaktion in einer Antwort oder in dem Ausbleiben einer Antwort bestehen. Wird die Erwartung nicht erfüllt, kann darin ein Fehler (z.B. Überlastung des Prozessors (PC)) gesehen werden, der aber nicht notwendigerweise zu einer Fehlermeldung führen muss; vielmehr hängt das von der Bewertung des Fehlers bzw. der Konstellation von Fehlern in der jüngsten Vergangenheit ab (Historie).

Der Unterschied beider Varianten der Erfindung ist also in der Anzahl der in die Bewertung des Watchdog (WDG) eingehenden Reaktionen des Prozessors (PC) zu sehen. Im erstgenannten Fall wird also pro vorgegebenem Empfangszeitraum eine Reaktion (Antwort oder Ausbleiben der Antwort) erwartet, im zweiten Fall sind es mindestens zwei Reaktionen, die gegebenenfalls auf eine oder mehrere Botschaften (MSG) des Watchdog (WDG) an den Prozessor (PC) von diesem erwartet werden. Die Bewertung hängt in beiden Fällen unter anderem davon ab, ob die erwartete Reaktion inhaltlich und/oder zeitlich korrekt erfolgt ist.

Wenn also im Vorstehenden und Nachfolgenden von einer "Antwort" des Prozessors (PC) die Rede ist, heißt das, dass damit eine Reaktion des Prozessors (PC) auf eine Botschaft des Watchdog (WDG) gemeint ist bzw. sein kann, wobei die Reaktion in einer Antwort oder in dem Ausbleiben einer Antwort bestehen kann.

Die Ablage der Bewertungen im Ergebnisspeicher (ES) kann in einem sukzessiven "Durchschieben" der Bewertungsergebnissequenz, also dem Verschieben von Bewertungsergebnisdaten oder aber im Verschieben von "Zeigern" (Pointern) bestehen, die auf die im Ergebnisspeicher (ES) abgelegten Bewertungsergebnisdaten zeigen, wobei der Speicherplatz für diese Bewertungsergebnisdaten unverändert bleibt oder veränderlich ist.

### Vorteil der Erfindung

Im Gegensatz zum Stand der Technik werden also nach der Erfindung die Bewertungsergebnisse innerhalb des Watchdog nicht sofort verwendet, sondern abgespeichert. Ein solcher Watchdog ermöglicht es zumindest in einigen Realisierungen, dass diese abgespeicherten Bewertungen der Antworten (ANS) dann als Grundlage für weitere Entscheidungen herangezogen werden können. Oszillierende Ergebnisse können somit erkannt und für entsprechende Warnungen genutzt werden. Die Vorteile sind hierauf aber nicht beschränkt.

### Beschreibung der Weiterbildungen/Ausbildungen der Erfindung

In ihrer allgemeinsten Form betrifft die Erfindung einen Watchdog zur Überwachung eines Prozessors (PC). Der Watchdog (WDG) sendet Botschaften (MSG) an den Prozessor (PC), der daraufhin Statusinformationen über sich und ggf. über Systemkomponenten (SC) und deren Testergebnisse zu vorbestimmten Zeiten als Antworten (ANS) an den Watchdog (WDG) zurücksendet. Der Watchdog (WDG) weist mindestens einen Ereignisspeicher (ES) in Form z.B. eines Schieberegisters (SR) auf, in dem der Watchdog (WDG) die Historie der Antworten (ANS) aufzeichnet und auf Muster in auftretenden fehlerhaften Antworten hin untersucht. Die Aufzeichnung wird durch ein Trigger-Ereignis veranlasst, das der Empfang einzelner Antworten und/oder das Ende von vorgesehenen Empfangszeiträumen sein können. In Abhängigkeit von den Mustern werden Signalisierungen an den Prozessor und/oder andere Systemkomponenten vorgenommen, die ggf. Maßnahmen einleiten und ihre Struktur und/oder die ausgeführten Programme und/oder die Priorität dieser Ausführungen etc. anpassen.

In einer ersten Ausführungsform der Erfindung ist die erfindungsgemäße Vorrichtung mit einem zusätzlichen zweiten Bewertungsmittel (VAL) als Teil des Watchdog (WDG) versehen, das zur Bewertung der zwischengespeicherten Informationen (Inf₁ bis Infₙ) des Schieberegisters (SR) dient. Diese zweiten Bewertungsmittel (VAL) können in Abhängigkeit vom Inhalt des Ergebnisspeichers (ES) bzw. des Schieberegisters (SR) zumindest ein Steuersignal (RES) erzeugen, das den Zustand des Prozessors (PC) verändern kann. Beispielsweise ist es denkbar, dass verschiedene Rücksetzsignale oder Interrupt-Signale je nach erkanntem Muster oder Anzahl der im Ergebnisspeicher (ES) bzw. im Schieberegister (SR) befindlichen "nicht korrekt" Informationen durch die zweiten Bewertungsmittel (VAL) aktiviert werden, die unterschiedliche Effekte auf den Prozessor (PC), dessen Programmablauf, Teile desselben oder sonstige Systemkomponenten (SC) haben. Es reicht aus, wenn aus Ausgangssignalen der zweiten Bewertungsmittel (VAL) zumindest ein solches Steuersignal (RES) erzeugt werden kann.

Dies hat den Vorteil, dass auch bei oszillierenden Bewertungsergebnissen komplexere Situationen erkannt werden können und je nach Situation durch spezifische Signalisierungen (RES) der Prozessor (PC), Teile desselben oder andere Systemkomponenten (SC) zu einem anderen Programmablauf oder anderen Maßnahmen veranlasst werden können. Eine solche Situationserkennung ist im Stand der Technik nicht bekannt.

In einer weiteren Ausgestaltung der Erfindung bewertet der der Watchdog (WDG) mittels der ersten Bewertungsmittel (AVAL) die Antwort (ANS) des Prozessors (PC) als "korrekt" oder "nicht korrekt". In der Regel wird es sich hierbei um ein einzelnes Bit, das die Werte 0 oder 1 annimmt, oder um eine Leitung handeln, die ein erstes Potenzial oder ein zweites Potenzial annimmt. Andere Realisierungen sind denkbar. Diese weitere Ausgestaltung der Erfindung ist dadurch gekennzeichnet, dass eine Antwort (ANS) durch den Watchdog (WDG) als "korrekt" bewertet wird, wenn die Anzahl der durch den Watchdog (WDG) empfangenen Antworten (ANS) innerhalb des vorbestimmten Empfangszeitraums (b) durch die nun empfangene Antwort (ANS) nicht eine vorgegebene maximale Anzahl von zu empfangenen Antworten (ANS) überschreitet oder am Ende des vorbestimmten Empfangszeitraums (b) die Anzahl der empfangenen Antworten (ANS) eine vorgegebene minimale Anzahl von zu empfangenen Antworten (ANS) nicht unterschreitet. Eine Antwort (ANS) ist zusätzlich "nicht korrekt", wenn die Anzahl der durch den Watchdog (WDG) empfangenen Antworten (ANS) innerhalb des vorbestimmten Empfangszeitraums (b) durch die empfangene Antwort (ANS) eine vorgegebene maximale Anzahl von zu empfangenen Antworten (ANS) oder die maximal zu erwartende Anzahl von Antworten überschreitet oder am Ende des vorbestimmten Empfangszeitraums (b) eine zumindest für diesen vorbestimmten Empfangszeitraum (b) vorgegebene minimale Anzahl von zu empfangenen Antworten (ANS) oder die minimal zu erwartende Anzahl von Antworten unterschreitet.

Diese Auswertung der Antwortanzahl bzw. Antworten in dem vorbestimmten Empfangszeitraum (b) ermöglicht weitere Bewertungen und dementsprechend flexiblere Reaktionen des Systems.

Bevorzugt erfolgt in einer weiteren Ausgestaltung der Erfindung die Bewertung der Antwort (ANS) des Prozessors (PC) durch die ersten Bewertungsmittel (AVAL) des Watchdog (WDG) zusätzlich in Abhängigkeit von zumindest einer, mehreren oder allen zwischengespeicherten Informationen (Infⱼ) der n zwischengespeicherten Informationen (Infⱼ bis Infₙ) des Schieberegisters (SR). Das bedeutet, dass nicht nur der Inhalt der Antworten (ANS) des Prozessors (PC) und deren Zeitpunkt in Bezug auf den vorbestimmten Empfangszeitraum (b) ausgewertet wird, sondern diese Daten auch in Bezug zu den bereits erhaltenen Antworten (ANS) gesetzt werden. Dies hat den Vorteil, dass beispielsweise die Art der bisher ergriffenen Maßnahmen in den Ergebnisspeicher (ES) oder das Schieberegister als Inhalt weiterer Informationsanteile der jeweiligen Informationen (Inf₁ bis Infₙ) mit abgelegt werden können. So kann beispielsweise der Fall eintreten, dass die Maßnahmen selbst durch Zusatzaufwände die Situation kurzfristig verschlechtern bevor die erwünschte "Besserung" der Belastungssituation erkannt wird. Daher kann es vorkommen, dass solche eigentlich als "nicht korrekt" zu bewertenden Antworten infolge der zuvor ergriffenen Maßnahmen als "korrekt", da erwartet, bewertet werden können.

Bevorzugt bewirken in einer weiteren Ausgestaltung der Erfindung die weiteren Bewertungsmittel (VAL) in Abhängigkeit von zumindest einer zwischengespeicherten Informationen (Infⱼ) der n zwischengespeicherten Informationen (Inf₁ bis Infₙ) des Schieberegisters (SR) des Ergebnisspeichers (ES) oder des Schieberegisters (SR) zusätzlich zumindest eine weitere Bewertung. In dieser weiteren Ausgestaltung der Erfindung wird diese weitere Bewertung ebenfalls als weiterer Informationsanteil einer Information in einer Speicherzelle des Ergebnisspeichers (ES) bzw. des Schieberegisters (SR) abgelegt. Somit umfasst dann zumindest eine zwischengespeicherte Information (Infⱼ) der zwischengespeicherten Informationen (Infⱼ bis Infₙ) des Ergebnisspeichers (ES) bzw. des Schieberegisters (SR) eine zwischengespeicherte weitere Bewertung der zweiten Bewertungsmittel (VAL) zusätzlich zur jeweiligen Bewertungen der Antworten (ANS) des Prozessors (PC) durch die ersten Bewertungsmittel (AVAL), die im ersten Informationsanteil der jeweiligen zwischengespeicherten Information (Infⱼ) der zwischengespeicherten n Informationen (Infⱼ bis Infₙ) des Ergebnisspeichers (ES) abgelegt ist.

Bevorzugt bewirken in einer weiteren Ausgestaltung der Erfindung die zweiten Bewertungsmittel (VAL) in Abhängigkeit vom Auftreten vorbestimmter Muster unter zumindest jeweils eines Anteiles zumindest zweier verschiedener zwischengespeicherten Informationen (Infⱼ, Infₖ, mit 1≤j≤n und 1≤k≤n und j≠k) der zwischengespeicherten Informationen (Inf₁ bis Infₙ) des Ergebnisspeichers (ES) bzw. des Schieberegisters (SR) zusätzlich zumindest eine zweite weitere Bewertung. Ganz besonders bevorzugt werden alle Informationen (Inf₁ bis Infₙ) des Ergebnisspeichers (ES) bzw. des Schieberegisters (SR) in eine solche Auswertung einbezogen.

In einer besonders bevorzugten Ausprägung der Erfindung wird der Ergebnisspeicher am Ende des vorbestimmten Empfangszeitraums (b) gelöscht. Dabei kann "gelöscht" beispielsweise bedeuten, dass die ersten Informationsanteile der zwischengespeicherten Informationen (Inf₁ bis Infₙ) des Schieberegisters (SR) am Ende des vorbestimmten Empfangszeitraums (b) auf einen Wert entsprechend "nicht korrekt" gesetzt werden. "Gelöscht" kann aber auch bedeuten, dass stattdessen die ersten Informationsanteile der zwischengespeicherten Informationen (Inf₁ bis Infₙ) des Schieberegisters (SR) am Ende des vorbestimmten Empfangszeitraums (b) auf einen Wert entsprechend "korrekt" gesetzt werden. Dies ist insbesondere dann von Vorteil, wenn die Vorrichtung zweistufig, wie im Folgenden erläutert, ausgeführt wird.

Bevorzugt wird in einer weiteren Ausgestaltung der Erfindung das erfindungsgemäße Prinzip mehrstufig angewandt. Zusätzliche zweite Bewertungsmittel (VAL), die Teil des Watchdog (WDG) sind, bewerten die zwischengespeicherten Informationen (Inf₁ bis Infₙ) im Ergebnisspeicher (ES) bzw. im Schieberegisters (SR) wie zuvor beschrieben. Die so erhaltenen Bewertungsergebnisse werden nun jedoch in mindestens einem weiteren Ergebnisspeicher (ES_{B}) bzw. mindestens einem weiteren Schieberegister (SR_{B}) abgelegt. Diese sind zusätzlich nun ebenfalls Teil des Watchdog (WDG). Der weitere Ergebnisspeicher (ER_{B}) besteht aus m (weiteren) Ergebnisspeicherzellen bzw. das weitere Schieberegister (SR_{B}) besteht aus m (weiteren) Schieberegisterzellen. Hierbei ist m eine ganze positive Zahl größer 1. In diesen weiteren Ergebnisspeicherzellen bzw. weiteren Schieberegisterzellen befinden sich m weitere zwischengespeicherte Informationen (Inf_{1B} bis Inf_{mB}). Die weiteren logischen und physikalischen Ergebnisspeicherpositionen bzw. weiteren logischen und physikalischen Schieberegisterpositionen, die diesen m weiteren Ergebnisspeicherzellen bzw. weiteren Schieberegisterzellen zugeordnet sind, können von 1 bis m durchnummeriert werden. Damit können auch die darin enthaltenen m weiteren zwischengespeicherten Informationen (Inf_{1B} bis Inf_{mB}) von 1 bis m entsprechend durchnummeriert werden. Somit ist dann jeder der m weiteren zwischengespeicherten Informationen (Inf_{1B} bis Inf_{mB}) eine eindeutige logische und eine eindeutige physikalische Ergebnisspeicherposition von m Ergebnisspeicherpositionen bzw. eine eindeutige logische und eine eindeutige physikalische Schieberegisterposition von m Schieberegisterpositionen zugeordnet, die von 1 bis m eineindeutig durchnummeriert sind. Wie zuvor weist auch hier bevorzugt jede der m weiteren zwischengespeicherten Informationen (Inf_{1B} bis Inf_{mB}) wieder zumindest einen ersten Informationsanteil auf. Wie zuvor in der einstufigen Lösung kann jede der m weiteren zwischengespeicherten Informationen (Inf_{1B} bis Inf_{mB}) ggf. weitere Informationsanteile über diesen ersten Informationsanteil hinaus aufweisen. Es handelt sich also auch hier typischerweise aber nicht notwendigerweise um komplexere Datenstrukturen. Im einfachsten Fall handelt es sich um ein Bit.

Weitere zweite Bewertungsmittel (VAL_{B}), die ebenfalls bevorzugt Teil des Watchdog (WDG) sind, bewerten nun diese weiteren zwischengespeicherten Informationen (Inf_{1B} bis Inf_{mB}) des weiteren Ergebnisspeichers (ES_{B}) bzw. des weiteren Schieberegisters (SR_{B}).

Sofern es sich bei dem weiteren Empfangsspeicher (ES_{B}) beispielsweise um ein weiteres Schieberegister (SR_{B}) handelt, löscht das weitere Schieberegister (SR_{B}) in einer ersten grundlegenden Ausprägung dieser Variante der Erfindung bei jedem Empfang einer Antwort (ANS) des Prozessors (PC) oder in einer zweiten grundlegenden Ausprägung dieser Variante der Erfindung zeitlich nach dem Empfang einer Antwort (ASW) durch dem Watchdog (WDG) oder zeitlich nach dem Ende des vorgesehenen Empfangszeitraums (b) die m-te weitere zwischengespeicherte Information (Inf_{mB}) aus dem weiteren Schieberegister (SR_{B}) und verschiebt jede der (m-1) weiteren zwischengespeicherten Informationen von der jeweiligen j-ten weiteren Schieberegisterposition (p_{jB}, mit 1≤j≤(m-1)) auf die (j+1)-te weitere Schieberegisterposition (p_{jB}, mit 2≤j≤n). Die dann frei gewordene erste weitere Schieberegisterposition füllt das weitere Schieberegister (SR_{B}) dann zumindest mit dem besagten Bewertungsergebnis der weiteren Bewertung der n Informationen (Inf₁ bis Infₙ) des ersten Ergebnisspeichers (ES) bzw. des ersten Schieberegisters(SR) durch die zweiten Bewertungsmittel (VAL) als neuen ersten Informationsanteil der neuen 1-ten weiteren zwischengespeicherten Information (Inf_{1B}). Dieser erste Informationsanteil der 1-ten weiteren zwischengespeicherten Information (Inf_{1B}) entspricht dann wieder dem logischen Wert "korrekt" oder "nicht korrekt" je nach Ergebnis der vorausgegangenen Bewertung der n Informationen (Inf₁ bis Infₙ) des ersten Ergebnisspeichers (ES) bzw. des ersten Schieberegisters(SR) durch zweite Bewertungsmittel (VAL).

Es kann sich aber auch um eine allgemeinere Form eines weiteren Ergebnisspeichers (ES_{B}) handeln. Der weitere Ergebnisspeicher (ES_{B}) löscht zeitlich nach jedem Empfang einer Antwort (ANS) des Prozessors (PC) durch dem Watchdog (WDG) oder zeitlich nach dem Ende des vorgesehenen Empfangszeitraums (b) zumindest eine weitere zwischengespeicherte Information (z.B. Inf_{mB}) aus dem weiteren Ergebnisspeicher (ES_{B}). Gleichzeitig oder in Zusammenhang damit verschiebt der weitere Ergebnisspeicher (ES_{B}) die verbleibenden (m-1) nicht gelöschten weiteren zwischengespeicherten Informationen von den ursprünglichen zugeordneten logischen weiteren Ergebnisspeicherpositionen innerhalb des weiteren Ergebnisspeichers (ES_{B}) auf andere logische weitere Ergebnisspeicherpositionen. Dies kann zum einen durch echte Verschiebung der Informationsdaten in andere physikalische weitere Ergebnisspeicherzellen geschehen oder viel einfacher durch Neuzuordnung der logischen weiteren Ergebnisspeicherpositionen zu den weiteren physikalischen Ergebnisspeicherpositionen und damit zu den weiteren Ergebnisspeicherzellen. Im einfachsten Fall wird nur ein weiterer Schreibzeiger verwendet, der festlegt, welche der weiteren Ergebnisspeicherzellen als nächstes gelöscht und überschrieben werden soll. Eine der weiteren Ergebnisspeicherzellen enthält dann nur den Löschwert. In diese weitere Ergebnisspeicherzelle wird dann die neue weitere Information (Inf_{1B}) geschrieben. Dieser Schreibvorgang kann gleichzeitig den Löschvorgang der bisherigen Information dieser weiteren Ergebnisspeicherzelle darstellen. Zumindest wird der erste Informationsanteil der weiteren Information in der betreffenden weiteren Ergebnisspeicherzelle festgelegt. Als zumindest neuen ersten Anteil der neuen zwischengespeicherten weiteren Information (z.B. Inf_{1B}) auf der betreffenden weiteren Ergebnisspeicherposition, in die keine der verbleibenden (m-1) zwischengespeicherten weiteren Informationen verschoben wurde, wird dann vorzugsweise zumindest das Ergebnis der Bewertung der n Informationen (Inf₁ bis Infₙ) des ersten Ergebnisspeichers (ES) bzw. des ersten Schieberegisters(SR) entsprechend einem logischen Wert "korrekt" oder "nicht korrekt" verwendet.

Die weiteren zweiten Bewertungsmittel (VAL_{B}) erzeugen nun in Abhängigkeit von diesen weiteren zwischengespeicherten Informationen (Inf_{jB}) der m weiteren zwischengespeicherten Informationen (Inf_{1B} bis Inf_{mB}) des weiteren Ergebnisspeichers (ESB) bzw. des weiteren Schieberegisters (SR_{B}) das Steuersignal (RES), das ebenfalls den Zustand des Prozessors (PC) verändern kann, anstelle der zweiten Bewertungsmittel (VAL), die in einer weiteren Variante ebenfalls ein Steuersignal (RES) erzeugen können, oder parallel zu diesen.

### Liste der Figuren

Die Erfindung wird nachfolgend anhand von Ausführungsbeispielen und der Zeichnungen näher erläutert. Im Einzelnen zeigen:
- Fig. 1: ein grobes vereinfachtes Schema des Zusammenwirkens einzelner nach der Erfindung vorgesehener Komponenten,
- Fig. 2: das Schema gemäß Fig. 1 mit einem Schieberegister (SR) als Ergebnisspeicher (ES),
- Fig. 3: einen zweistufigen Bewertungsprozess,
- Fig. 4: einen zweistufigen Bewertungsprozess gemäß Fig. 3, wobei der erste Ergebnisspeicher (ES) ein Schieberegister (SR) und der weitere Ergebnisspeicher (ES_{B}) ein weiteres Schieberegister (SR_{B}) ist,
- Fign. 5 bis 7: schematisch ein beispielhaftes, aufeinanderfolgendes zeitliches Verhalten einer beispielhaften einstufigen Lösung mit einem Schieberegister (SR) entsprechend Fig. 2,
- Fig. 8: ein beispielhaftes zweistufiges Verfahren entsprechend der Fig. 4 und
- Fig. 9: ein zweistufiges Verfahren gemäß Fig. 2, wobei das Muster der im Schieberegister (SR) hinterlegten Informationen ausgewertet wird.

### Beschreibung der Figuren

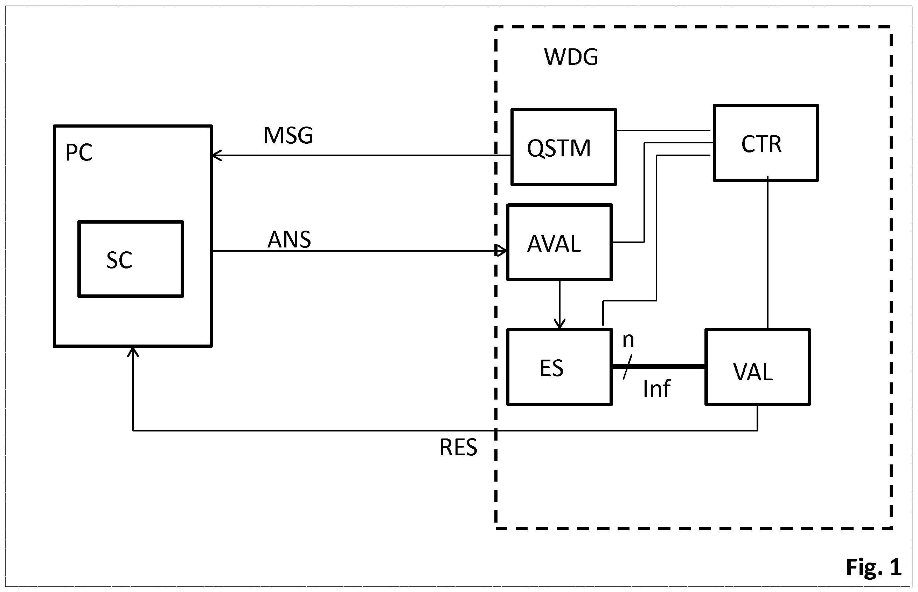

Fig. 1 zeigt ein grobes vereinfachtes Schema des Zusammenwirkens der einzelnen Komponenten der erfindungsgemäßen Vorrichtung. Der Watchdog (WDG) umfasst erste Stimulierungsmittel (QSTM), erste Bewertungsmittel (AVAL), einen internen Taktgeber (CTR), einen ersten Ergebnisspeicher (ES) und zweite Bewertungsmittel (VAL). Der Prozessor (PC) umfasst hier die weiteren Systemkomponenten (SC) mit. Die ersten Stimulierungsmittel (QSTM) senden Botschaften (MSG) vom Watchdog (WDG) an den Prozessor (PC), die dieser dann mit Antworten (ANS) zu richtigen Zeitpunkten und mit erwarteten Inhalten und in richtiger Anzahl beantworten soll, was dann durch den Watchdog (WDG) geprüft werden kann. Diese Prüfung wird durch die ersten Bewertungsmittel (AVAL) durchgeführt. Die ersten Bewertungsmittel (AVAL) bewerten die Antworten (ANS) des Prozessors (PC) an den Watchdog (WDG) nach Aufforderung durch die besagten Botschaften (MSG), die das erste Stimulierungsmittel (QSTM) vom Watchdog (WDG) an den Prozessor (PC) gesandt hat und die dieser dann mit eben diesen Antworten (ANS) zu richtigen Zeitpunkten und mit erwarteten Inhalten und in richtiger Anzahl beantworten soll, was dann durch die ersten Bewertungsmittel (AVAL) des Watchdog (WDG) wiederum geprüft werden kann. Diese Bewertungsergebnisse der ersten Bewertungsmittel (AVAL) werden im Ergebnisspeicher (ES) zwischengespeichert, der die Historie dieser Bewertungen mitführt. Der Ergebnisspeicher (ES) besteht aus Ergebnisspeicherzellen. Jede Ergebnisspeicherzelle des Ergebnisspeichers (ES) ist mit einer Nummer von 1 bis n durchnummeriert. Das bedeutet, dass jede Ergebnisspeicherzelle zum einen eine reale physikalische Ergebnisspeicherzellenposition aufweist und zum anderen einen logische Ergebnisspeicherzellenposition aufweist, die mit der realen nicht identisch sein muss. Der Ergebnisspeicher kann als Schieberegister (SR) ausgeführt werden. Der Ergebnisspeicher (ES) löscht zeitlich nach jedem Empfang einer Antwort (ANS) des Prozessors (PC) durch dem Watchdog (WDG) oder nach dem Empfang einzelner Antworten (ANS) oder zeitlich nach dem Ende des vorgesehenen Empfangszeitraums (b) vorzugsweise zumindest eine zwischengespeicherte Information (z.B. Infₙ) aus dem Ergebnisspeicher (ES). Gleichzeitig oder in Zusammenhang damit verschiebt der Ergebnisspeicher (ES) die verbleibenden (n-1) nicht gelöschten zwischengespeicherten Informationen von den ursprünglichen zugeordneten logischen Ergebnisspeicherpositionen auf andere logische Ergebnisspeicherpositionen. Dies kann zum einen durch echte Verschiebung der Informationsdaten in andere physikalische Ergebnisspeicherzellen geschehen oder viel einfacher durch Neuzuordnung der logischen Ergebnisspeicherpositionen zu den physikalischen Ergebnisspeicherpositionen und damit zu den Ergebnisspeicherzellen. Im einfachsten Fall wird nur ein Schreibzeiger verwendet, der festlegt, welche der Ergebnisspeicherzellen als nächstes gelöscht werden soll und dann nach einem vorbestimmbaren Schema neu positioniert wird. Eine der Ergebnisspeicherzellen enthält dann nur den Löschwert. In diese Ergebnisspeicherzelle wird dann die neue zwischenzuspeichernde Information (Inf₁) geschrieben. Dieser Schreibvorgang kann gleichzeitig den Löschvorgang der bisherigen Information dieser Ergebnisspeicherzelle darstellen. Zumindest wird der erste Informationsanteil der Information in der betreffenden Ergebnisspeicherzelle festgelegt. Als zumindest neuen ersten Anteil der neuen zwischengespeicherten Information (z.B. Inf₁) auf der betreffenden logischen Ergebnisspeicherposition, in die keine der verbliebenen (n-1) zwischengespeicherten Informationen verschoben wurde, wird dann zumindest das Ergebnis der Bewertung der empfangenen Antwort (ANS) durch die ersten Bewertungsmittel (AVAL) verwendet. Je nachdem ob dieses Ergebnis einem logischen Wert "korrekt" oder "nicht korrekt" entsprechend durch die ersten Bewertungsmittel (AVAL) bewertet wurde, enthält dann die zugehörige Ergebnisspeicherzelle den zugeordneten logischen Wert. Diese so zwischengespeicherten Informationen (Inf₁ bis Infₙ) werden in dem Beispiel der Figur 1 durch zweite Bewertungsmittel (VAL) bewertet. Sie bewertet die im Ergebnisspeicher (ES) bzw. im Schieberegister (SR) zwischengespeicherten n Informationen (Inf₁ bis Infₙ). Hierbei können die zweiten Bewertungsmittel (VAL) ggf. auch mehr als nur eine Bewertung erzeugen. Die zweiten Bewertungsmittel (VAL) können beispielsweise die Zahl der "korrekt"-Informationen in den Ergebnisspeicherzellen des Ergebnisspeichers (ES) feststellen und mit einem Schwellwert vergleichen. Liegt die ermittelte Zahl unter dem Schwellwert, so kann beispielsweise das Steuersignal (RES) oder ein anderes entsprechendes Signal zur Beeinflussung des Prozessors (PC) oder von Teilen desselben oder von sonstigen Systemkomponenten (SC) durch zweite Bewertungsmittel (VAL) gesetzt werden. Auch können weitere Signale in Form weiterer Bewertungen durch die zweiten Bewertungsmittel (VAL) erzeugt werden, die beispielsweise bestimmten Mustern in den Ergebnisspeicherzellen des Ergebnisspeichers (ES) entsprechen können. Der Taktgeber (CTR) erzeugt die Zeitsignale für alle relevanten Blöcke (QSTM, AVAL, SR, VAL) des Watchdog (WDG). Insbesondere legt der Taktgeber (CTR) vorzugsweise den Zeitpunkt der Aussendung der Botschaften (MSG) an den Prozessor (PC) durch den Watchdog (WDG) fest und die zeitliche Lage und Dauer der vorgesehenen Empfangszeiträume (b) für die Antworten (ANS) des Prozessors (PC) auf diese Botschaften (MSG). Somit veranlasst der Taktgeber (CTR) vorzugsweise im Zusammenwirken mit den ersten Bewertungsmitteln (AVAL), die die Botschaften (MSG) des Prozessors (PC) empfangen, dass der Ergebnisspeicher (ES) die Ergebnisspeicherpositionen der zwischengespeicherten Informationen (Inf₁ bis Infₙ) zu den richtigen Zeitpunkten wie vorgegeben ändert und die richtige Ergebnisspeicherzelle löscht und das neue Bewertungsergebnis der ersten Bewertungsmittle (AVAL) zum richtigen Zeitpunkt in die richtige Ergebnisspeicherstelle schreibt.

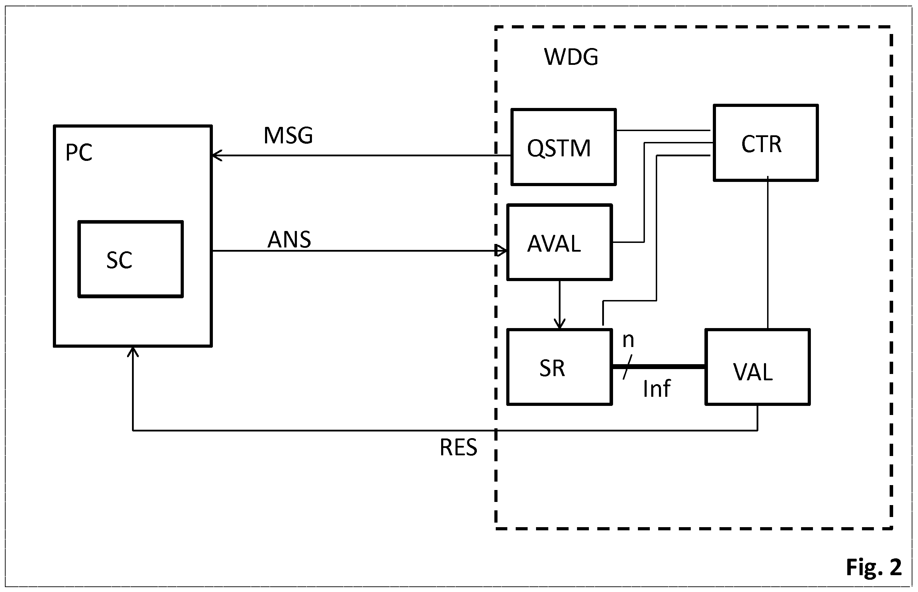

Fig. 2 entspricht der Fig. 1 mit einem Schieberegister (SR) als Ergebnisspeicher (ES).

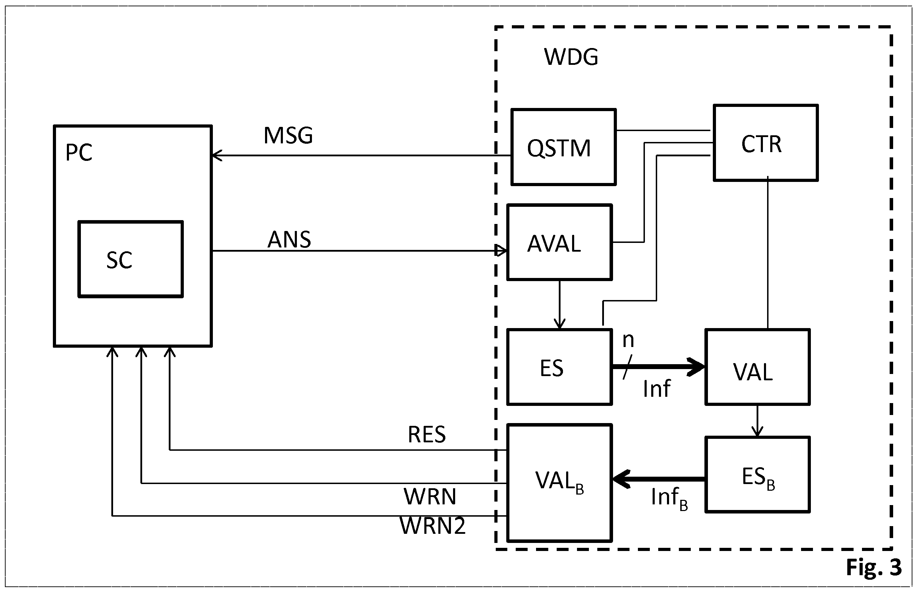

Fig. 3 zeigt eine erfindungsgemäße zweistufige Vorrichtung. Sie zeigt wieder ein grobes vereinfachtes Schema des Zusammenwirkens der einzelnen Komponenten der erfindungsgemäßen Vorrichtung. Der Watchdog (WDG) umfasst wieder erste Stimulierungsmittel (QSTM), erste Bewertungsmittel (AVAL), einen internen Taktgeber (CTR), einen ersten Ergebnisspeicher (ES), zweite Bewertungsmittel (VAL) einen weiteren Ergebnisspeicher (ES_{B}) und weitere zweite Bewertungsmittel (VAL_{B}). Der Prozessor (PC) umfasst hier beispielhaft wieder die weiteren Systemkomponenten (SC) mit. Die ersten Stimulierungsmittel (QSTM) senden Botschaften (MSG) vom Watchdog (WDG) an den Prozessor (PC), die dieser dann mit Antworten (ANS) zu richtigen Zeitpunkten und mit erwarteten Inhalten und in richtiger Anzahl beantworten soll, was dann durch den Watchdog (WDG) geprüft werden kann. Diese Prüfung wird wieder durch die ersten Bewertungsmittel (AVAL) durchgeführt. Die ersten Bewertungsmittel (AVAL) bewerten die Antworten (ANS) des Prozessors (PC) an den Watchdog (WDG) nach Aufforderung durch die besagten Botschaften (MSG), die das erste Stimulierungsmittel (QSTM) vom Watchdog (WDG) an den Prozessor (PC) gesandt hat und die dieser dann mit eben diesen Antworten (ANS) zu richtigen Zeitpunkten und mit erwarteten Inhalten und in richtiger Anzahl an Antworten (ANS) beantworten soll, was dann durch die ersten Bewertungsmittel (AVAL) des Watchdog (WDG) wiederum geprüft werden kann. Diese Bewertungsergebnisse der ersten Bewertungsmittel (AVAL) werden im ersten Ergebnisspeicher (ES) zwischengespeichert, die die Historie dieser Bewertungen mitführt. Der Ergebnisspeicher (ES) besteht wieder aus Ergebnisspeicherzellen. Jede Ergebnisspeicherzelle des Ergebnisspeichers (ES) ist mit einer Nummer von 1 bis n durchnummeriert. Das bedeutet, dass jede Ergebnisspeicherzelle zum einen eine reale physikalische Ergebnisspeicherzellenposition aufweist und zum anderen einen logische Ergebnisspeicherzellenposition aufweist, die mit der realen nicht identisch sein muss. Der erste Ergebnisspeicher (ES) kann als Schieberegister (SR) ausgeführt werden. Der erste Ergebnisspeicher (ES) löscht zeitlich nach jedem Empfang einer Antwort (ANS) des Prozessors (PC) durch dem Watchdog (WDG) oder nach dem Empfang einer Antwort (ANS) oder zeitlich nach dem Ende des vorgesehenen Empfangszeitraums (b) zumindest eine zwischengespeicherte Information (z.B. Infₙ) aus dem ersten Ergebnisspeicher (ES). Gleichzeitig oder in Zusammenhang damit verschiebt der erste Ergebnisspeicher (ES) die verbleibenden (n-1) nicht gelöschten zwischengespeicherten Informationen von den ursprünglichen zugeordneten logischen Ergebnisspeicherpositionen auf andere logische Ergebnisspeicherpositionen des ersten Ergebnisspeichers (ES). Dies kann zum einen durch echte Verschiebung der Informationsdaten in andere physikalische Ergebnisspeicherzellen des ersten Ergebnisspeichers (ES) geschehen oder viel einfacher durch Neuzuordnung der logischen Ergebnisspeicherpositionen zu den Ergebnisspeicherzellen des ersten Ergebnisspeichers (ES). Im einfachsten Fall wird nur ein erster Schreibzeiger für den ersten Ergebnisspeicher (ES) verwendet, der festlegt, welche der Ergebnisspeicherzellen des ersten Ergebnisspeichers (ES) als nächstes gelöscht werden soll. Eine der Ergebnisspeicherzellen des ersten Ergebnisspeichers (ES) enthält dann nur den Löschwert. In diese Ergebnisspeicherzelle des ersten Ergebnisspeichers (ES) wird dann die neue zwischenzuspeichernde Information (Inf₁) geschrieben. Dieser Schreibvorgang kann gleichzeitig den Löschvorgang der bisherigen Information dieser Ergebnisspeicherzelle des ersten Ergebnisspeichers (ES) darstellen. Zumindest wird der erste Informationsanteil der Information in der betreffenden Ergebnisspeicherzelle des ersten Ergebnisspeichers (ES) festgelegt. Als zumindest neuen ersten Anteil der neuen zwischengespeicherten Information (z.B. Inf₁) auf der betreffenden Ergebnisspeicherposition des ersten Ergebnisspeichers (ES), in die keine der verbliebenen (n-1) zwischengespeicherten Informationen verschoben wurde, wird dann zumindest das Ergebnis der Bewertung der empfangenen Antwort (ANS) durch die ersten Bewertungsmittel (AVAL) verwendet. Je nachdem ob dieses Ergebnis einem logischen Wert "korrekt" oder "nicht korrekt" entsprechend bewertet wurde, enthält dann die zugehörige Ergebnisspeicherzelle des ersten Ergebnisspeichers (ES) den zugeordneten logischen Wert. Die so zwischengespeicherten Informationen (Inf₁ bis Infₙ) werden in dem Beispiel der Fig. 3 nun durch zweite Bewertungsmittel (VAL) bewertet. Sie bewerten die im ersten Ergebnisspeicher (ES) bzw. im ersten Schieberegister (SR) zwischengespeicherten n Informationen (Inf₁ bis Infₙ), die die letzten Bewertungsergebnisse widerspiegeln. Hierbei können die zweiten Bewertungsmittel (VAL) ggf. auch mehr als nur eine weitere Bewertung erzeugen. Diese zweiten Bewertungsmittel (VAL) können beispielsweise im Rahmen der Bewertung des Inhalts des ersten Ergebnisspeichers (ES) bzw. des ersten Schieberegisters (SR) beispielsweise die Zahl der "korrekt"-Informationen in den Ergebnisspeicherzellen des Ergebnisspeichers (ES) feststellen und mit einem ersten Schwellwert vergleichen. Liegt diese so ermittelte Zahl unter dem ersten Schwellwert, so wird das Ergebnis beispielsweise mit einem logischen Wert entsprechend "korrekt" bewertet und im anderen Fall mit einem logischen Wert entsprechend "nicht korrekt" bewertet.

Diese Bewertungsergebnisse der zweiten Bewertungsmittel (VAL) werden nun in einem weiteren Ergebnisspeicher (ES_{B}) im Gegensatz zur Fig. 1 ebenfalls zwischengespeichert. Dieser führt die Historie dieser Bewertungen mit. Der weitere Ergebnisspeicher (ES_{B}) besteht analog zum ersten Ergebnisspeicher (ES) aus weiteren Ergebnisspeicherzellen. Jede weitere Ergebnisspeicherzelle des weiteren Ergebnisspeichers (ES_{B}) ist mit einer Nummer von 1 bis m durchnummeriert. Das bedeutet, dass jede weitere Ergebnisspeicherzelle zum einen eine reale physikalische weitere Ergebnisspeicherzellenposition aufweist und zum anderen eine logische weitere Ergebnisspeicherzellenposition aufweist, die mit der realen nicht identisch sein muss. Der weitere Ergebnisspeicher (ES_{B}) kann als weiteres Schieberegister (SR_{B}) ausgeführt werden. Der weitere Ergebnisspeicher (ES_{B}) löscht zeitlich nach jedem Empfang einer Antwort (ANS) des Prozessors (PC) durch dem Watchdog (WDG) oder nach dem Empfang einzelner Antworten (ANS) oder zeitlich nach dem Ende des vorgesehenen Empfangszeitraums (b) zumindest eine weitere zwischengespeicherte Information (z.B. Inf_{mB}) aus dem weiteren Ergebnisspeicher (ES_{B}). Gleichzeitig oder in Zusammenhang damit verschiebt der weitere Ergebnisspeicher (ES_{B}) die verbleibenden (m-1) nicht gelöschten zwischengespeicherten weiteren Informationen von den ursprünglichen zugeordneten logischen weiteren Ergebnisspeicherpositionen auf andere logische weitere Ergebnisspeicherpositionen des weiteren Ergebnisspeichers (ES_{B}). Dies kann zum einen durch echte Verschiebung der weiteren Informationsdaten in andere physikalische weitere Ergebnisspeicherzellen des weiteren Ergebnisspeichers (ES_{B}) geschehen oder viel einfacher durch Neuzuordnung der logischen weiteren Ergebnisspeicherpositionen zu den weiteren Ergebnisspeicherzellen des weiteren Ergebnisspeichers (ES_{B}). Im einfachsten Fall wird nur ein weiterer Schreibzeiger für den weiteren Ergebnisspeicher (ES_{B}) verwendet, der festlegt, welche der weiteren Ergebnisspeicherzellen des weiteren Ergebnisspeichers (ES_{B}) als nächstes gelöscht oder überschrieben werden soll. Eine der weiteren Ergebnisspeicherzellen des weiteren Ergebnisspeichers (ES_{B}) enthält dann nur den Löschwert. In diese weitere Ergebnisspeicherzelle des weiteren Ergebnisspeichers (ES_{B}) wird dann die neue zwischenzuspeichernde weitere Information (Inf_{1B}) geschrieben. Dieser Schreibvorgang kann gleichzeitig den Löschvorgang der bisherigen weiteren Information dieser weiteren Ergebnisspeicherzelle des weiteren Ergebnisspeichers (ES_{B}) darstellen. Zumindest wird der erste Informationsanteil der weiteren Information in der betreffenden weiteren Ergebnisspeicherzelle des weiteren Ergebnisspeichers (ES_{B}) festgelegt. Als zumindest neuen ersten Anteil der neuen zwischengespeicherten weiteren Information (z.B. Inf_{1B}) auf der betreffenden weiteren Ergebnisspeicherposition des weiteren Ergebnisspeichers (ES_{B}), in die keine der verbliebenen (m-1) zwischengespeicherten weiteren Informationen verschoben wurde, wird dann zumindest das weitere Ergebnis der weiteren Bewertung des Inhalts des ersten Ergebnisspeichers (ES) durch die zweiten Bewertungsmittel (VAL) verwendet. Je nachdem ob dieses weitere Ergebnis einem logischen Wert "korrekt" oder "nicht korrekt" entsprechend bewertet wurde, enthält dann die zugehörige weitere Ergebnisspeicherzelle des weiteren Ergebnisspeichers (ES_{B}) den zugeordneten logischen Wert. Die so zwischengespeicherten m weiteren Informationen (Inf_{1B} bis Inf_{mB}) werden in dem Beispiel der Fig. 3 nun durch weitere zweite Bewertungsmittel (VAL_{B}) wiederum bewertet. Sie bewerten die im weiteren Ergebnisspeicher (ES_{B}) bzw. im weiteren Schieberegister (SR_{B}) zwischengespeicherten m Informationen (Inf_{1B} bis Inf_{mB}), die die letzten Bewertungsergebnisse der zweiten Bewertungsmittel (VAL) widerspiegeln.

Hierbei können die weiteren zweiten Bewertungsmittel (VAL_{B}) ggf. auch mehr als nur eine weitere Bewertung erzeugen. In dem Beispiel der Fig. 3 sind dies das erste Warnsignal (WRN) und das zweite Warnsignal (WRN2). Diese weiteren zweiten Bewertungsmittel (VAL_{B}) können beispielsweise im Rahmen der Bewertung des Inhalts des weiteren Ergebnisspeichers (ES_{B}) bzw. des weiteren Schieberegisters (SR_{B}) beispielsweise analog zur Fig. 1 die Zahl der "korrekt"-Informationen in den weiteren Ergebnisspeicherzellen des weiteren Ergebnisspeichers (ES_{B}) feststellen und mit einem ersten weiteren Schwellwert vergleichen. Liegt diese so ermittelte Zahl unter dem ersten weiteren Schwellwert, so kann beispielsweise das Steuersignal (RES) oder ein anderes entsprechendes Signal zur Beeinflussung des Prozessors (PC) oder von Teilen desselben oder von sonstigen Systemkomponenten (SC) gesetzt werden. Liegt diese so ermittelte Zahl unter einem zweiten weiteren Schwellwert, so kann beispielsweise das erste Warnsignal (WRN) gesetzt werden, woraufhin der Prozessor (PC) oder Teile desselben oder sonstige Systemkomponenten (SC) Maßnahmen zur Reduktion der Prozessor- oder Systemlast einleiten können. Liegt diese so ermittelte Zahl unter einem dritten weiteren Schwellwert, so kann beispielsweise das zweite Warnsignal (WRN2) gesetzt werden, woraufhin der Prozessor (PC) oder Teile desselben oder sonstige Systemkomponenten (SC) weiter reichende Maßnahmen zur weiteren Reduktion der Prozessor- oder Systemlast einleiten können. Würden alle diese Maßnahmen nicht ausreichen, käme es schließlich beispielsweise zum Setzen des ersten Steuersignals (RES), das beispielsweise einen kompletten System- oder Prozessorneustart zum Ergebnis haben könnte.

Wie zuvor können auch hier weitere Signale nun aber durch die weiteren zweiten Bewertungsmittel (VAL_{B}) in Form weiterer Bewertungen erzeugt werden, die beispielsweise bestimmten Mustern in den weiteren Ergebnisspeicherzellen des weiteren Ergebnisspeichers (ES_{B}) entsprechen können. In dem Beispiel der Fig. 3 erzeugt der Taktgeber (CTR) die Zeitsignale für alle relevanten Blöcke (QSTM, AVAL, ES, VAL, ES_{B}, VAL_{B}) des Watchdog. Insbesondere legt der Taktgeber (CTR) wieder vorzugsweise den Zeitpunkt der Aussendung der Botschaften (MSG) an den Prozessor (PC) fest und die zeitliche Lage und Dauer der vorgesehenen Empfangszeiträume (b) für die Antworten (ANS) des Prozessors (PC) auf diese Botschaften (MSG). Somit veranlasst der Taktgeber (CTR) vorzugsweise im Zusammenwirken mit den ersten Bewertungsmitteln (AVAL), die die Botschaften (MSG) des Prozessors (PC) empfangen, dass der Ergebnisspeicher (ES) die Ergebnisspeicherpositionen der n zwischengespeicherten Informationen (Inf₁ bis Infₙ) zu den richtigen Zeitpunkten wie vorgegeben ändert und die richtige Ergebnisspeicherzelle löscht und das neue Bewertungsergebnis der ersten Bewertungsmittle (AVAL) zum richtigen Zeitpunkt in die richtige Ergebnisspeicherstelle des ersten Ergebnisspeichers (ES) schreibt. Außerdem veranlasst der Taktgeber (CTR) im Beispiel der Fig. 3 vorzugsweise im Zusammenwirken mit den zweiten Bewertungsmitteln (VAL), dass der weitere Ergebnisspeicher (ES_{B}) die weiteren Ergebnisspeicherpositionen der m weiteren zwischengespeicherten Informationen (Inf_{1B} bis Inf_{nB}) zu den richtigen Zeitpunkten wie vorgegeben ebenfalls ändert und die richtige weitere Ergebnisspeicherzelle löscht und das neue Bewertungsergebnis der zweiten Bewertungsmittle (VAL) zum richtigen Zeitpunkt in die richtige weitere Ergebnisspeicherstelle des weiteren Ergebnisspeichers (ES_{B}) schreibt.

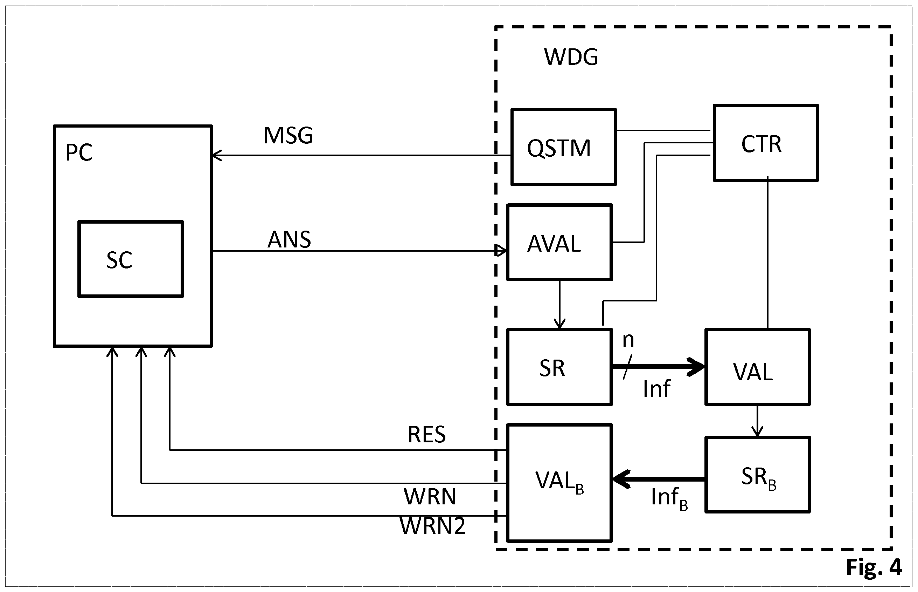

Fig. 4 entspricht der Fig. 3, wobei der erste Ergebnisspeicher (ES) ein Schieberegister (SR) ist und der weitere Ergebnisspeicher (ES_{B}) ein weiteres Schieberegister (SR_{B}) ist.

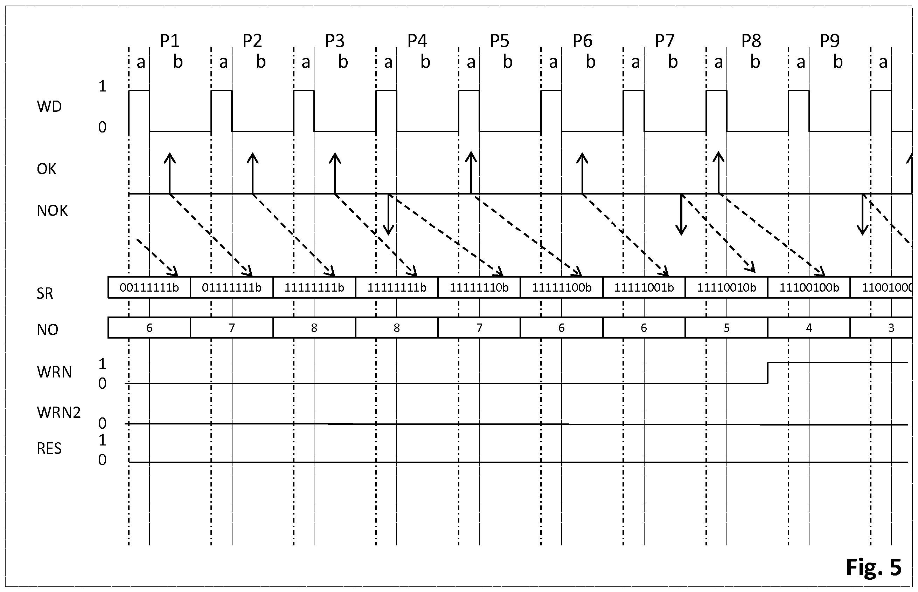

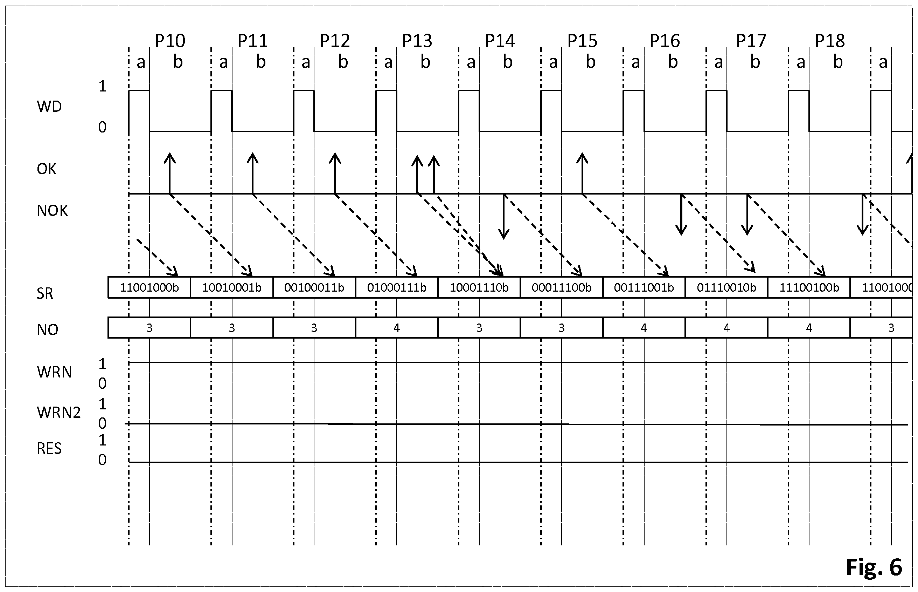

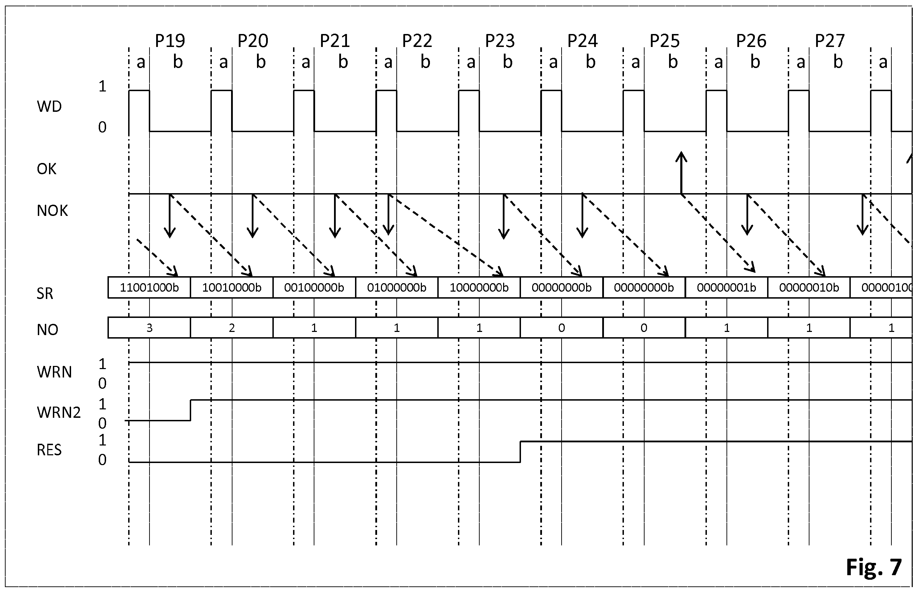

Fign. 5 bis 7 zeigen schematisch ein beispielhaftes, aufeinanderfolgendes zeitliches Verhalten einer beispielhaften einstufigen Lösung mit einem Schieberegister (SR) entsprechend Fig. 2. Der Taktgeber (CTR) erzeugt ein beispielhaftes Fenstersignal (WD). In dem Beispiel der Fign. 5 bis 7 soll ein 1-Pegel bedeuten, dass keine Antworten erwartet werden und dass Antworten in diesen Zeiträumen mit einem 1-Pegel unabhängig von deren Inhalt als "nicht korrekt" bewertet werden. In einem Zeitraum mit einem 0-Pegel des Fenstersignals (WD) werden Antworten vorzugsweise in einer vorgegebenen Anzahl erwartet. Sofern deren Inhalte korrekt sind, also einem vorausbestimmbaren Inhalt entsprechen, werden diese als "korrekt bewertet". Ggf. kann eine abweichende Anzahl von Antworten auch zu einer "nicht korrekt" Bewertung führen. In den Beispielen der Fign. 5 bis 7 werden beispielhaft 27 zeitliche Zeiträume (P1 bis P27) dargestellt. Jeder dieser beispielhaften 27 Zeiträume (P1 bis P27) ist beispielhaft in einen ersten Zeitraum (a) und einen zweiten Zeitraum (b) unterteilt. In dem ersten Zeitraum (a) ist in dem Beispiel der Fign. 5 bis 7 das beispielhafte Fenstersignal (WD) auf einem logischen 1-Pegel und im zweiten Zeitraum (b) auf einem logischen 0-Pegel. Unter dem Fenstersignal (WD) sind in den Fign. 5 bis 7 Zeitpunkte von Antworten (ANS) auf einem Zeitstrahl von links nach rechts dargestellt. Der Zeitpunkt der jeweiligen Antwort (ANS) wird durch einen Pfeil nach oben oder unten an einer entsprechenden Stelle auf dem Zeitstrahl in zeitlicher Relation zu dem Fenstersignal (WD) symbolisiert. Ein Pfeil nach unten soll dabei einer inhaltlich als "nicht korrekt" durch die ersten Bewertungsmittel (AVAL) bewerteten Antwort (ANS) des Prozessors (PC) an den Watchdog (WDG) entsprechen. Ein Pfeil nach oben soll dabei einer inhaltlich als "korrekt" durch die ersten Bewertungsmittel (AVAL) bewerteten Antwort (ANS) des Prozessors (PC) an den Watchdog (WDG) entsprechen. Links sind in den Fign. 5 bis 7 entsprechend die Werte "OK" für inhaltlich "korrekt" und "NOK" für inhaltlich "nicht korrekt" markiert. Bei dem Beispiel der Fign. 5 bis 7 wird ein Schieberegister (SR) als erster Ergebnisspeicher (ES) verwendet. Das Schieberegister (SR) umfasst in diesem Beispiel exemplarische 8 Bit. Es enthält im ersten Zeitraum (P1) den Wert "00111111". Das "b" soll indizieren, dass es sich um Bit-Werte handelt, die einer logischen "0" (="nicht korrekt") oder einer logischen "1" (="korrekt") entsprechen können.

Im ersten Zeitraum (P1) empfängt der Watchdog (WDG) eine als "korrekt" durch die ersten Bewertungsmittel (AVAL) bewertete Antwort (ANS) im dafür vorgesehenen Empfangszeitraum (b). Der interne Taktgeber (CTR) des Watchdog (WDG) erzeugt in diesem Beispiel aufgrund des Empfangs der Antwort (ANS) mit einer typischerweise durch die Implementation vorgegebenen konstanten Verzögerung zum Empfangszeitpunkt der Antwort (ANS) des Prozessors (PC) eine Übernahme des Bewertungsergebnisses der ersten Bewertungsmittel (AVAL) in das erste Schieberegister (SR) in Verbindung mit einer Schiebeoperation nach links. Der Inhalt des Schieberegisters (SR) ist in diesem Beispiel dann anschließend "01111111", da eine korrekte Antwort (ANS) zum richtigen Zeitpunkt empfangen wurde.

Im zweiten Zeitraum (P2) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "11111111", da eine korrekte Antwort (ANS) zum richtigen Zeitpunkt empfangen wurde.

Im dritten Zeitraum (P3) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "11111111", da eine korrekte Antwort (ANS) zum richtigen Zeitpunkt empfangen wurde.

Im vierten Zeitraum (P4) empfängt der Watchdog (WDG) eine als "nicht korrekt" durch die ersten Bewertungsmittel (AVAL) bewertete Antwort (ANS) im nicht dafür vorgesehenen Empfangszeitraum (a). Der Inhalt des Schieberegisters (SR) ist nach Übernahme der Bewertung und durchgeführter Schiebeoperation in diesem Beispiel dann anschließend "11111110", da eine nicht korrekte Antwort (ANS) zum falschen Zeitpunkt empfangen wurde.

Im fünften Zeitraum (P5) empfängt der Watchdog (WDG) eine als "korrekt" durch die ersten Bewertungsmittel (AVAL) bewertete Antwort (ANS) im nicht dafür vorgesehenen Empfangszeitraum (a). Der Inhalt des Schieberegisters (SR) ist nach Übernahme der Bewertung und durchgeführter Schiebeoperation in diesem Beispiel dann anschließend "11111100", da eine korrekte Antwort (ANS) zum falschen Zeitpunkt empfangen wurde.

Im sechsten Zeitraum (P6) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "11111001", da eine korrekte Antwort (ANS) zum richtigen Zeitpunkt empfangen wurde.

Im siebten Zeitraum (P7) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "11110010", da eine nicht korrekte Antwort (ANS) zum richtigen Zeitpunkt empfangen wurde.

Im achten Zeitraum (P8) empfängt der Watchdog (WDG) eine als "korrekt" durch die ersten Bewertungsmittel (AVAL) bewertete Antwort (ANS) im nicht dafür vorgesehenen Empfangszeitraum (a). Der Inhalt des Schieberegisters (SR) ist nach Übernahme der Bewertung und durchgeführter Schiebeoperation in diesem Beispiel dann anschließend "11100100", da eine korrekte Antwort (ANS) zum falschen Zeitpunkt empfangen wurde.

Im neunten Zeitraum (P9) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "11001000", da eine nicht korrekte Antwort (ANS) zum richtigen Zeitpunkt empfangen wurde.

Im zehnten Zeitraum (P10) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "10010001", da eine korrekte Antwort (ANS) zum richtigen Zeitpunkt empfangen wurde.

Im elften Zeitraum (P11) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00100011", da eine korrekte Antwort (ANS) zum richtigen Zeitpunkt empfangen wurde.

Im zwölften Zeitraum (P12) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "01000111", da eine korrekte Antwort (ANS) zum richtigen Zeitpunkt empfangen wurde.

Im dreizehnten Zeitraum (P13) empfängt der Watchdog (WDG) zwei als "korrekt" durch die ersten Bewertungsmittel (AVAL) bewertete Antwort (ANS) im dafür vorgesehenen Empfangszeitraum (b). Es wurde jedoch nur eine Antwort (ANS) des Prozessors erwartet. Daher erfolgt in diesem Beispiel die Bewertung der eigentlich inhaltlich korrekten Antworten (ANS) des Prozessors (PC) als "nicht korrekt". Der Inhalt des Schieberegisters (SR) ist nach Übernahme der Bewertung und durchgeführter Schiebeoperation in diesem Beispiel dann anschließend "10001110", da eine nicht korrekte Antwort (ANS) zum richtigen Zeitpunkt empfangen wurde.

Im vierzehnten Zeitraum (P14) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00011100", da eine nicht korrekte Antwort (ANS) zum richtigen Zeitpunkt empfangen wurde.

Im fünfzehnten Zeitraum (P15) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00111001", da eine korrekte Antwort (ANS) zum richtigen Zeitpunkt empfangen wurde.

Im sechzehnten Zeitraum (P16) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "01110010", da eine nicht korrekte Antwort (ANS) zum richtigen Zeitpunkt empfangen wurde.

Im siebzehnten Zeitraum (P17) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "11100100", da eine nicht korrekte Antwort (ANS) zum richtigen Zeitpunkt empfangen wurde.

Im achtzehnten Zeitraum (P18) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "11001000", da eine nicht korrekte Antwort (ANS) zum richtigen Zeitpunkt empfangen wurde.

Im neunzehnten Zeitraum (P19) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "10010000", da eine nicht korrekte Antwort (ANS) zum richtigen Zeitpunkt empfangen wurde.

Im zwanzigsten Zeitraum (P20) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00100000", da eine nicht korrekte Antwort (ANS) zum richtigen Zeitpunkt empfangen wurde.

Im einundzwanzigsten Zeitraum (P21) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "01000000", da eine nicht korrekte Antwort (ANS) zum richtigen Zeitpunkt empfangen wurde.

Im zweiundzwanzigsten Zeitraum (P22) empfängt der Watchdog (WDG) eine als "nicht korrekt" durch die ersten Bewertungsmittel (AVAL) bewertete Antwort (ANS) im nicht dafür vorgesehenen Empfangszeitraum (a). Der Inhalt des Schieberegisters (SR) ist nach Übernahme der Bewertung und durchgeführter Schiebeoperation in diesem Beispiel dann anschließend "10000000", da eine nicht korrekte Antwort (ANS) zum falschen Zeitpunkt empfangen wurde.

Im dreiundzwanzigsten Zeitraum (P23) empfängt der Watchdog (WDG) keine Antwort (ANS)im dafür vorgesehenen Empfangszeitraum (b), obwohl eine Antwort (ANS) des Prozessors (PC) im dafür vorgesehenen Empfangszeitraum (b)erwartet wurde. Dies wird hier beispielhaft als eine "nicht korrekt" zu bewertende Antwort (ANS) durch die ersten Bewertungsmittel (AVAL) bewertet. Der Inhalt des Schieberegisters (SR) ist nach Übernahme der Bewertung und durchgeführter Schiebeoperation in diesem Beispiel dann anschließend "00000000", da eine nicht korrekte Antwort (ANS) zum richtigen Zeitpunkt empfangen wurde.

Im vierundzwanzigsten Zeitraum (P24) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00000000", da eine nicht korrekte Antwort (ANS) zum richtigen Zeitpunkt empfangen wurde.

Im fünfundzwanzigsten Zeitraum (P25) empfängt der Watchdog (WDG) eine als "korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00000001", da eine nicht korrekte Antwort (ANS) zum richtigen Zeitpunkt empfangen wurde.

Im sechsundzwanzigsten Zeitraum (P26) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00000010", da eine nicht korrekte Antwort (ANS) zum richtigen Zeitpunkt empfangen wurde.

Im siebenundzwanzigsten Zeitraum (P27) empfängt der Watchdog (WDG) eine als "nicht korrekt" durch die ersten Bewertungsmittel (AVAL) bewertete Antwort (ANS) im dafür vorgesehenen Empfangszeitraum (b). Der Inhalt des Schieberegisters (SR) ist nach Übernahme der Bewertung und durchgeführter Schiebeoperation in diesem Beispiel dann anschließend "00000100", da eine nicht korrekte Antwort (ANS) zum richtigen Zeitpunkt empfangen wurde.

Die zweiten Bewertungsmittel (VAL) werten parallel die jeweiligen Informationen (Inf₁ bis Inf₈) in dem beispielhaften Schieberegister (SR) der Fign. 5 bis 7 aus. In diesem Beispiel wird nach jeder Schiebeoperation des Schieberegisters (SR) dessen Inhalt durch die zweiten Bewertungsmittel bewertet. Dies geschieht hier beispielhaft durch Zählung der 1-Pegel innerhalb des Schieberegisters (SR), die die als "korrekt" bewerteten Antworten (ANS) der letzten acht Zeiträume angeben, in einem beispielhaften Zählwert (NO). Andere Zählweisen und Auswertungen sind natürlich ausdrücklich denkbar. In diesem Beispiel wird das Steuersignal (RES) gesetzt, wenn das Schieberegister (SR) beispielhaft keine Information in den acht Informationen (Inf₁ bis Inf₈) der acht Schieberegisterzellen, die als korrekte Information "korrekte" Information in den letzten acht Zeiträumen bewertet wurde, enthält. Je nach Implementation kann es sinnvoll sein, wenn das Steuersignal (RES) nicht wie in den Fign. 5 bis 7 dargestellt, ein Non-Return-To-Zero-Signal (NRZ-Signal) ist, sondern ein Return-To-Zero-Signal (RTZ-Signal) ist, dass bei Eintritt der Bedingung nur für einen kurzen Zeitraum aktiv ist und dann erst wieder bei dem erneuten Eintreten der Bedingung wieder aktiv wird. In diesem Beispiel wird das erste Warnsignal (WRN) gesetzt, wenn das Schieberegister (SR) beispielhaft in weniger als drei Informationen (Inf₁ bis Inf₈) für drei korrekte Informationen in den letzten acht Zeiträumen enthält. In diesem Beispiel wird das zweite Warnsignal (WRN2) gesetzt, wenn das Schieberegister beispielhaft weniger als fünf Informationen (Inf₁ bis Inf₈) für fünf korrekte Informationen in den letzten acht Zeiträumen enthält.

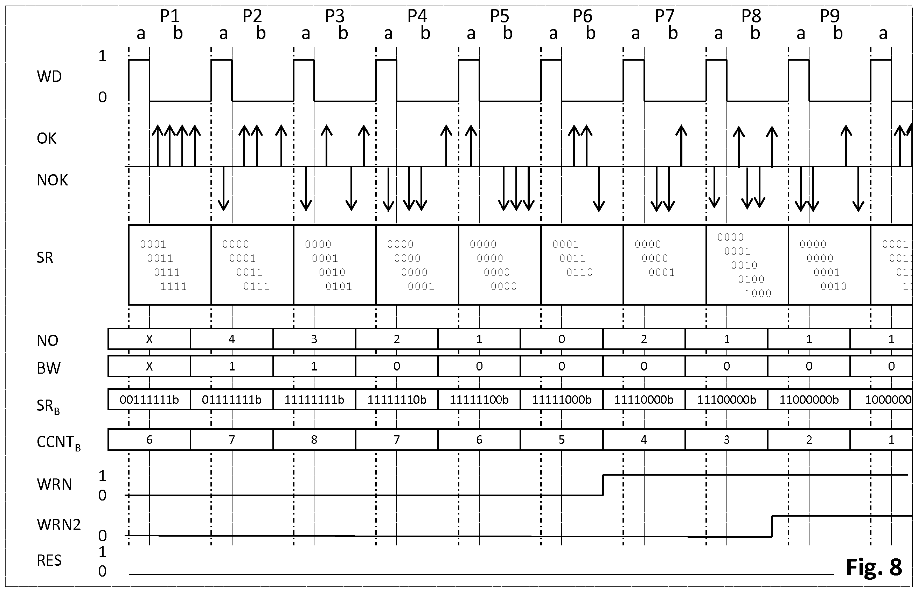

Fig. 8 zeigt ein beispielhaftes zweistufiges Verfahren entsprechend der Fig. 4. Der erste Ergebnisspeicher (ES) wird hier durch ein erstes Schieberegister (SR) mit einer beispielhaften Breite von 4 Bit realisiert. In diesem Beispiel führt das erste Schieberegister (SR) mit jedem Empfang einer Antwort (ANS) einen Schiebevorgang nach links aus und übernimmt das Bewertungsergebnis der ersten Bewertungsmittel (AVAL) in die rechteste Schieberegisterzelle (Ergebnisspeicherzelle). Zur besseren Übersichtlichkeit sind die beispielhaften zeitlich unterschiedlichen Werte der 4 zwischengespeicherten Informationen (Inf₁ bis Inf₄) des Schieberegisters (SR) untereinander und versetzt hingeschrieben.

Zu Anfang des ersten Zeitraums (P1) ist der Inhalt des Schieberegisters (SR) auf einen Rücksetzwert, hier beispielhaft "0000" zurückgesetzt. In diesem Zeitraum empfängt der Watchdog (WDG) vier erwartete und keine nicht erwarteten Antworten (ANS) des Prozessors (PC). Alle Antworten (ASN) werden als "korrekt" durch die ersten Bewertungsmittel (AVAL) bewertet. Keine der Antworten (ASN) wird als "nicht korrekt" durch die ersten Bewertungsmittel (AVAL) bewertet. Alle erwarteten Antworten werden im dafür vorgesehenen Empfangszeitraum (b) empfangen. Keine Antworten werden im nicht dafür vorgesehenen Empfangszeitraum (a) empfangen. Der Inhalt des Schieberegisters (SR) ist nach Übernahme der Bewertung und 4 durchgeführten Schiebeoperationen in diesem Beispiel dann anschließend "1111".

Zu Anfang des zweiten Zeitraums (P2) ist der Inhalt des Schieberegisters (SR) auf einen Rücksetzwert, hier beispielhaft "0000" zurückgesetzt. In diesem Zeitraum empfängt der Watchdog (WDG) vier erwartete und keine nicht erwarteten Antworten (ANS) des Prozessors (PC). Drei Antworten (ASN) werden als "korrekt" durch die ersten Bewertungsmittel (AVAL) bewertet. Eine der Antworten (ASN) wird als "nicht korrekt" durch die ersten Bewertungsmittel (AVAL) bewertet. Drei der erwarteten Antworten werden im dafür vorgesehenen Empfangszeitraum (b) empfangen. Eine Antwort wird im nicht dafür vorgesehenen Empfangszeitraum (a) empfangen. Der Inhalt des Schieberegisters (SR) ist nach Übernahme der Bewertung und 4 durchgeführten Schiebeoperationen in diesem Beispiel dann anschließend "0111".

Zu Anfang des dritten Zeitraums (P3) ist der Inhalt des Schieberegisters (SR) auf einen Rücksetzwert, hier beispielhaft "0000" zurückgesetzt. In diesem Zeitraum empfängt der Watchdog (WDG) vier erwartete und keine nicht erwarteten Antworten (ANS) des Prozessors (PC). Zwei Antworten (ASN) werden als "korrekt" durch die ersten Bewertungsmittel (AVAL) bewertet. Zwei der Antworten (ASN) werden als "nicht korrekt" durch die ersten Bewertungsmittel (AVAL) bewertet. Drei der erwarteten Antworten werden im dafür vorgesehenen Empfangszeitraum (b) empfangen. Eine Antwort wird im nicht dafür vorgesehenen Empfangszeitraum (a) empfangen. Der Inhalt des Schieberegisters (SR) ist nach Übernahme der Bewertung und 4 durchgeführten Schiebeoperationen in diesem Beispiel dann anschließend "0101".

Zu Anfang des vierten Zeitraums (P4) ist der Inhalt des Schieberegisters (SR) auf einen Rücksetzwert, hier beispielhaft "0000" zurückgesetzt. In diesem Zeitraum empfängt der Watchdog (WDG) vier erwartete und keine nicht erwarteten Antworten (ANS) des Prozessors (PC). Eine Antwort (ASN) wird als "korrekt" durch die ersten Bewertungsmittel (AVAL) bewertet. Drei der Antworten (ASN) werden als "nicht korrekt" durch die ersten Bewertungsmittel (AVAL) bewertet. Drei der erwarteten Antworten werden im dafür vorgesehenen Empfangszeitraum (b) empfangen. Eine Antwort wird im nicht dafür vorgesehenen Empfangszeitraum (a) empfangen. Der Inhalt des Schieberegisters (SR) ist nach Übernahme der Bewertung und 4 durchgeführten Schiebeoperationen in diesem Beispiel dann anschließend "0001".

Zu Anfang des fünften Zeitraums (P5) ist der Inhalt des Schieberegisters (SR) auf einen Rücksetzwert, hier beispielhaft "0000" zurückgesetzt. In diesem Zeitraum empfängt der Watchdog (WDG) vier erwartete und keine nicht erwarteten Antworten (ANS) des Prozessors (PC). Eine Antwort (ASN) wird als "korrekt" durch die ersten Bewertungsmittel (AVAL) bewertet. Drei der Antworten (ASN) werden als "nicht korrekt" durch die ersten Bewertungsmittel (AVAL) bewertet. Drei der erwarteten Antworten werden im dafür vorgesehenen Empfangszeitraum (b) empfangen. Eine korrekte Antwort wird im nicht dafür vorgesehenen Empfangszeitraum (a) empfangen. Der Inhalt des Schieberegisters (SR) ist nach Übernahme der Bewertung und 4 durchgeführten Schiebeoperationen in diesem Beispiel dann anschließend "0000".

Zu Anfang des sechsten Zeitraums (P6) ist der Inhalt des Schieberegisters (SR) auf einen Rücksetzwert, hier beispielhaft "0000" zurückgesetzt. In diesem Zeitraum empfängt der Watchdog (WDG) nur drei statt erwarteter 4 Antworten (ANS) des Prozessors (PC). Zwei Antworten (ASN) werden als "korrekt" durch die ersten Bewertungsmittel (AVAL) bewertet. Eine der Antworten (ASN) wird als "nicht korrekt" durch die ersten Bewertungsmittel (AVAL) bewertet. Die drei erwarteten Antworten werden im dafür vorgesehenen Empfangszeitraum (b) empfangen. Keine Antwort wird im nicht dafür vorgesehenen Empfangszeitraum (a) empfangen. Die fehlende Antwort wird beispielhaft hier als "nicht korrekte" Antwort bewertet. Der Inhalt des Schieberegisters (SR) ist nach Übernahme der Bewertung und 3 durchgeführten Schiebeoperationen in diesem Beispiel dann anschließend "0110".

Zu Anfang des siebten Zeitraums (P7) ist der Inhalt des Schieberegisters (SR) auf einen Rücksetzwert, hier beispielhaft "0000" zurückgesetzt. In diesem Zeitraum empfängt der Watchdog (WDG) nur drei statt erwarteter 4 Antworten (ANS) des Prozessors (PC). Eine Antwort (ASN) wird als "korrekt" durch die ersten Bewertungsmittel (AVAL) bewertet. Zwei der Antworten (ASN) werden als "nicht korrekt" durch die ersten Bewertungsmittel (AVAL) bewertet. Die drei erwarteten Antworten werden im dafür vorgesehenen Empfangszeitraum (b) empfangen. Keine Antwort wird im nicht dafür vorgesehenen Empfangszeitraum (a) empfangen. Die fehlende Antwort wird beispielhaft hier als "nicht korrekte" Antwort bewertet. Der Inhalt des Schieberegisters (SR) ist nach Übernahme der Bewertung und 3 durchgeführten Schiebeoperationen in diesem Beispiel dann anschließend "0001".

Zu Anfang des achten Zeitraums (P8) ist der Inhalt des Schieberegisters (SR) auf einen Rücksetzwert, hier beispielhaft "0000" zurückgesetzt. In diesem Zeitraum empfängt der Watchdog (WDG) 5 statt erwarteter 4 Antworten (ANS) des Prozessors (PC). Zwei Antworten (ASN) werden als "korrekt" durch die ersten Bewertungsmittel (AVAL) bewertet. Drei der Antworten (ASN) werden als "nicht korrekt" durch die ersten Bewertungsmittel (AVAL) bewertet. Vier Antworten werden im dafür vorgesehenen Empfangszeitraum (b) empfangen. Eine Antwort wird im nicht dafür vorgesehenen Empfangszeitraum (a) empfangen. Die zusätzliche inhaltlich korrekte Antwort wird beispielhaft hier als "nicht korrekte" Antwort bewertet. Der Inhalt des Schieberegisters (SR) ist nach Übernahme der Bewertung und 5 durchgeführten Schiebeoperationen in diesem Beispiel dann anschließend "1000".

Zu Anfang des neunten Zeitraums (P9) ist der Inhalt des Schieberegisters (SR) auf einen Rücksetzwert, hier beispielhaft "0000" zurückgesetzt. In diesem Zeitraum empfängt der Watchdog (WDG) 4 der erwarteten 4 Antworten (ANS) des Prozessors (PC). Eine Antwort (ASN) wird als "korrekt" durch die ersten Bewertungsmittel (AVAL) bewertet. Drei der Antworten (ASN) werden als "nicht korrekt" durch die ersten Bewertungsmittel (AVAL) bewertet. Drei Antworten werden im dafür vorgesehenen Empfangszeitraum (b) empfangen. Eine Antwort wird im nicht dafür vorgesehenen Empfangszeitraum (a) empfangen. Der Inhalt des Schieberegisters (SR) ist nach Übernahme der Bewertung und 4 durchgeführten Schiebeoperationen in diesem Beispiel dann anschließend "0010".

In diesem Beispiel der Fig. 8 zählen die zweiten Bewertungsmittel (VAL) in Form eines Zählwertes (NO) die mit "korrekt" bewerteten letzten 4 Antworten des Prozessors (PC) an den Watchdog (WDG). Die zweiten Bewertungsmittel (VAL) vergleichen in diesem Beispiel diesen so ermittelten Zählwert (NO) mit einem vierten Schwellwert. Liegt der Zählwert (NO) in diesem Beispiel unter dem vierten Schwellwert von 3, so wird ein Bewertungssignal (BW) gesetzt. Liegt der Zählwert darüber, so wird dieses beispielhafte Bewertungssignal (BW) zurückgesetzt.

Der Wert dieses Bewertungssignals (BW) wird beispielhaft am Ende jedes Zeitraums, also am Ende des jeweiligen vorgesehener Empfangszeitraums (b) für die Antworten (ANS) in ein weiteres Schieberegister (SR_{B}) übernommen, das hier den weiteren Ergebnisspeicher (ES_{B}) darstellt.

Daher wird das Überprüfungsergebnis in Form des logischen Pegels des Bewertungssignals (BW) im ersten Zeitraum (P1) und im zweiten Zeitraum (B2) mit einen 1-Pegel bewertet, was hier "korrekt" bedeuten soll und in den übrigen Zeiträumen mit einem 0-Pegel bewertet, was hier "nicht korrekt" bedeuten soll.

Diese somit im weiteren Schieberegister (SR_{B}) gespeicherten Überprüfungsergebnisse werden durch weitere zweite Bewertungsmittel (VAL_{B}) ausgewertet. Dies geschieht hier beispielhaft durch Zählung der 1-Pegel innerhalb des weiteren Schieberegisters (SR_{B}). Hierdurch wird ein zweiter Zählwert (CCNT_{B}) durch die weiteren zweiten Bewertungsmittel (VAL_{B}) bestimmt.

Die weiteren zweiten Bewertungsmittel (VAL_{B}) vergleichen diesen zweiten Zählwert (CCNT_{B}) beispielsweise mit einem ersten Schwellwert, der hier beispielhaft 1 ist. Liegt der zweite Zählwert (CCNT_{B}) unterhalb des ersten Schwellwerts, so wird in dem Beispiel der Fig. 8 das Steuersignal (RES) gesetzt und ansonsten nicht gesetzt.

Die weiteren zweiten Bewertungsmittel (VAL_{B}) vergleichen den zweiten Zählwert (CCNT_{B}) in dem Beispiel der Fig. 8 mit einem zweiten Schwellwert, der hier beispielhaft 5 ist. Liegt der zweite Zählwert (CCNT_{B}) unterhalb des zweiten Schwellwerts, so wird in dem Beispiel der Fig. 8 das erste Warnsignal (WRN) gesetzt und ansonsten nicht gesetzt.

Die weiteren zweiten Bewertungsmittel (VAL_{B}) vergleichen den zweiten Zählwert (CCNT_{B}) in dem Beispiel der Fig. 8 mit einem dritten Schwellwert, der hier beispielhaft 3 ist. Liegt der zweite Zählwert (CCNT_{B}) unterhalb des dritten Schwellwerts, so wird in dem Beispiel der Fig. 8 das zweite Warnsignal (WRN2) gesetzt und ansonsten nicht gesetzt.

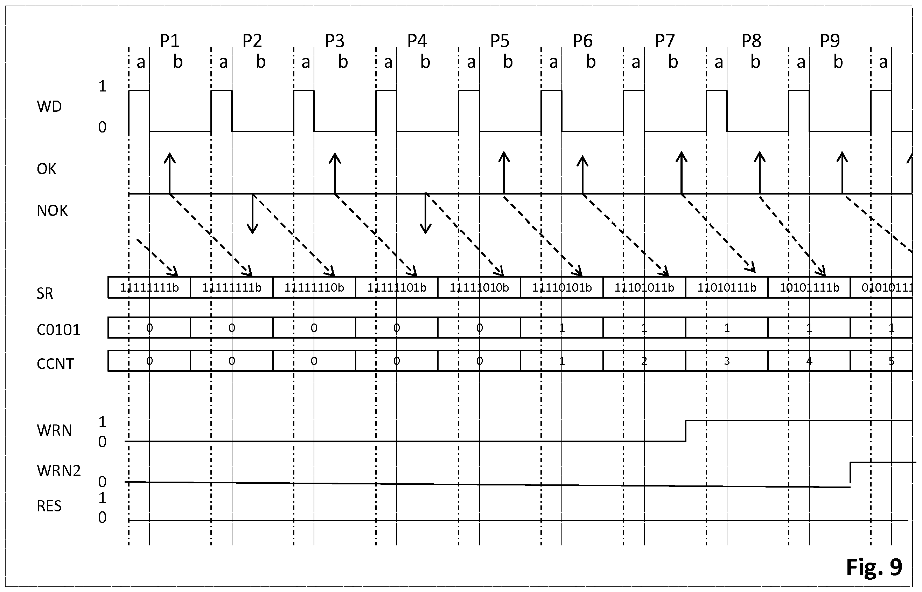

Das Beispiel der Fig. 9 entspricht in seiner Grundstruktur wieder der Fig. 2. Die Auswertung des Schieberegisters (SR) durch die zweiten Bewertungsmittel (VAL) erfolgt nun jedoch in anderer Weise als die Auswertung entsprechend den Fign. 5 bis 7. Es wird nun nicht die Anzahl der korrekten Antworten, die im Schieberegister (SR) als 1-Information hinterlegt sind ausgewertet, sondern das Muster. Hier versuchen die zweiten Bewertungsmittel das Muster "0101" zu detektieren. Liegt dies in einem Bereich in vier aufeinander folgenden Schieberegisterzellen des Schieberegisters (SR) vor, so wird in diesem Beispiel ein internes Bewertungssignal (hier C0101) auf 1 gesetzt. Ein Aufwärts/Abwärtszähler (CCNT) der zweiten Bewertungsmittel (VAL) zählt am Ende jedes Zeitraums (P1 bis P9) aufwärts, wenn das Bewertungssignal (C0101) 1 ist, und abwärts, wenn es 0 ist. Liegt der Wert des Aufwärts/Abwärtszählers (CCNT) über einen ersten Schwellwert (hier 2), so wird das erste Warnsignal (WRN) gesetzt. Liegt der Wert des Aufwärts/Abwärtszählers (CCNT) über einen zweiten Schwellwert (hier nicht mehr angegeben), so wird das zweite Warnsignal (WRN2) gesetzt. Liegt der Wert des Aufwärts/Abwärtszählers (CCNT) über einen dritten Schwellwert (hier nicht mehr angegeben), so wird das Steuersignal (RES) gesetzt.

### Glossar

Zwischengespeicherte Informationen (Inf₁ bis Infₙ) und (Inf_{1B} bis Inf_{nB}). Unter den zwischengespeicherten Informationen (Inf₁ bis Infₙ) und unter den weiteren zwischengespeicherten Informationen (Inf_{1B} bis Inf_{nB}) werden im Sinne der Erfindung Datensätze mit mindestens einem Datum verstanden. Im einfachsten Fall handelt es sich also um die Information "korrekt" oder "nicht korrekt", was vorzugsweise dann in einem Bit als z.B. "logisch 1" oder "logisch 0" kodiert wird. Wie in der Beschreibung oben angesprochen, ist es aber denkbar, komplexere Bewertungen vorzunehmen und damit Bewertungsvektoren als einzelne zwischengespeicherte Information zu verwenden.

### Ergebnisspeicher

Ein Ergebnisspeicher besteht im Sinne der Erfindung aus mehreren (n oder m) Ergebnisspeicherzellen. Jede Ergebnisspeicherzelle kann eine Information (Infⱼ) bzw. (Inf_{jB}) speichern. Jede der Informationen kann mehrere Teilinformationen -auch Informationsanteile genannt - umfassen. Es kann sich also um eine komplexere Datenstruktur handeln. Im einfachsten Fall ist eine solche Information aber nur ein Bit. Jeder der n bzw. m im Ergebnisspeicher zwischengespeicherten Informationen (Inf₁ bis Infₙ) bzw. (Inf_{1B} bis Inf_{mB}) kann eine logische und eine physikalische Ergebnisspeicherposition zugeordnet werden. Bei einem Trigger-Ereignis werden die n bzw. m Informationen (Inf₁ bis Infₙ) bzw. (Inf₁ bis Infₘ) im Ergebnisspeicher in einer vorbestimmbaren Weise verschoben oder verwürfelt. Dies kann rein logisch durch Änderung der logischen Ergebnisspeicherpositionen oder durch tatsächliche Verschiebung der n bzw. m Informationen (Inf₁ bis Infₙ) bzw. (Inf₁ bis Infₘ) im Ergebnisspeicher auf andere Ergebnisspeicherzellen also durch Änderung der physikalischen Ergebnisspeicherpositionen erfolgen. Eine vorbestimmte Information der zwischengespeicherten Informationen (Inf₁ bis Infₙ) bzw. (Inf₁ bis Infₘ) des Ergebnisspeichers wird bei dem Trigger-Ereignis durch einen durch Bewertungsmittel (AVAL, VAL) ermittelten Bewertungswert zumindest teilweise überschrieben und damit gelöscht. Natürlich können Beschreiben und Löschen auch sequentiell hintereinander ausgeführt werden. Im einfachste Fall kann ein Schreib-/Lesezeiger innerhalb des Ereignisspeichers bei jedem Trigger-Ereignis neu auf eine neue Ereignisspeicherzelle in vorbestimmbarer Weise positioniert werden, die dann mit dem zwischenzuspeichernden Bewertungsergebnis überschrieben wird. Vorzugsweise werden alle Ergebnisspeicherzellen einmal überschrieben bevor eine Ergebnisspeicherzelle erneut überschrieben, wird.

### Trigger-Ereignis

Ein Trigger-Ereignis für das Schieben eines Schieberegisters oder das Neustrukturieren der Informationen im Ereignisspeicher (wie unter Ereignisspeicher beschrieben) kann der Empfang einer Antwort (ANS) des Prozessors durch den Watchdog (WDG) oder der Empfang jeder Antwort (ANS) des Prozessors durch den Watchdog (WDG) oder das Ende des vorbestimmten Empfangszeitraums (b) oder der das Ende einer vorbestimmten oder eingestellten Anzahl q aufeinanderfolgender Empfangszeiträume (b) sein, typischerweise aber nicht notwendigerweise durch andere Zeiträume (a, c) getrennt sind. Nicht jede Antwort (ANS) des Prozessors (PC) muss ein Trigger-Signal sein. Es ist aber bevorzugt, dass jede Antwort (ANS) des Prozessors (PC) ein Trigger-Signal ist.

### Schieberegister (SR)

Im Allgemeinen wird unter einem Schieberegister ein Register verstanden, dass in jeder Speicherstelle ein einzelnes Bit umfasst, das bei Vorliegen einer Taktflanke nach links oder rechts geschoben wird. Im Sinne der Erfindung enthalten die Registerzellen jedoch nicht nur ein Bit sondern die Datensätze der zwischengespeicherten Informationen (Inf₁ bis Infₙ) bzw. (Inf_{1B} bis Inf_{mB}). Ein solcher Datensatz einer zwischengespeicherten Information (Infⱼ) bzw. (Inf_{jB}) kann zwar auch nur aus einem Bit bestehen, muss es aber nicht. Um den Schiebevorgang zu ermöglichen, muss die Datenstruktur der Registerzellen unabhängig davon, ob die Registerzellen genutzt werden oder nicht, gleich sein.

### Bezugszeichenliste

- a: erster Zeitraum, zu dem kein Empfang von Antworten (ANS) vorgesehen ist. Der Zeitraum überlappt sich zeitlich nicht mit dem zweiten Zeitraum (c), zu dem keine Bewertung von Antworten (ANS) durch den Watchdog (WDG) erfolgt, und mit dem vorgesehenen Empfangszeitraum (b) für eine Antwort (ANS) des Prozessors (PC). Die zeitliche Länge eines ersten Zeitraums kann 0 sein. Die zeitliche Länge des ersten Zeitraums kann von erstem Zeitraum zu ersten Zeitraum variieren.
- ANS: Antwort des Prozessors (PC) auf eine oder mehrere Botschaften (MSG) hin, dies das erste Stimulierungsmittel (QSTM) als Teil des Watchdog (WDG) an den Prozessor (PC) gesendet hat.
- ANSI: erste Antwort des Prozessors (PC)
- ANS2: zweite Antwort des Prozessor (PC)
- AVAL: erste Bewertungsmittel (AVAL). Die ersten Bewertungsmittel sind Teil des Watchdog (WDG). Sie dienen zur Bewertung von Antworten (ANS) des Prozessors (PC) an den Watchdog (WDG) nach Aufforderung durch Botschaften (MSG) die das erste Stimulierungsmittel (QSTM) vom Watchdog (WDG) an den Prozessor (PC) gesandt hat und die dieser dann mit eben diesen Antworten (ANS) zu richtigen Zeitpunkten und mit erwarteten Inhalten und in richtiger Anzahl beantworten soll, was dann durch die ersten Bewertungsmittel des Watchdog (WDG) wiederum geprüft werden kann.
- b: zweiter Zeitraum, auch vorgesehener Empfangszeitraum für eine Antwort (ANS) genannt. Die zeitliche Länge eines zweiten Zeitraums muss größer 0 sein. Die zeitliche Länge des zweiten Zeitraums kann von zweitem Zeitraum zu zweiten Zeitraum variieren.
- b1: erster Empfangszeitraum für die erste Antwort (ANS1)
- b2: zweiter Empfangszeitraum für die zweite Antwort (ANS2)
- BW: Bewertungssignal
- c: dritter Zeitraum (c), zu dem keine Bewertung von Antworten (ANS) durch den Watchdog erfolgt. Der dritte Zeitraum überlappt sich zeitlich nicht mit dem ersten Zeitraum (a), zu dem kein Empfang von Antworten (ANS) vorgesehen ist, und mit dem vorgesehenen Empfangszeitraum (b), d.h. dem zweiten Zeitraum, für eine Antwort (ANS) des Prozessors (PC). Die zeitliche Länge eines dritten Zeitraums kann 0 sein. Die zeitliche Länge des dritten Zeitraums kann von drittem Zeitraum zu dritten Zeitraum variieren.
- CCNT_{B}: zweiter Zählwert
- CTR: interner Taktgeber (CTR), der Teil des Watchdog (WDG) ist.
- ES: Ergebnisspeicher, der Teil des Watchdog (WDG) ist und aus Ergebnisspeicherzellen besteht. Jede Ergebnisspeicherzelle des Ergebnisspeichers ist mit einer Nummer von 1 bis n durchnummeriert. Das bedeutet, dass jede Ergebnisspeicherzelle zum einen eine reale physikalische Ergebnisspeicherzellenposition und zum anderen eine logische Ergebnisspeicherzellenposition aufweist, die mit der realen nicht identisch sein muss. Der Ergebnisspeicher kann als Schieberegister (SR) ausgeführt sein.
- ES_{B}: weiterer Ergebnisspeicher, der Teil des Watchdog (WDG) ist und aus weiteren Ergebnisspeicherzellen besteht. Jede weitere Zelle des weiteren Ergebnisspeichers ist mit einer Nummer von 1 bis m durchnummeriert. Das bedeutet, dass jede Zelle des weiteren Ergebnisspeichers zum einen eine reale physikalische weitere Zellenposition und zum anderen eine logische Zellenposition aufweist, die mit der realen nicht identisch sein muss. Der weitere Ergebnisspeicher kann (als weiteres) Schieberegister (SR_{B}) ausgeführt sein.
- Inf₁: erste zwischengespeicherte Information im Ergebnisspeicher (ES) oder im Schieberegister (SR).
- Infⱼ: j-te zwischengespeicherte Information im Ergebnisspeicher (ES) oder im Schieberegister (SR).
- Infₙ: n-te zwischengespeicherte Information im Ergebnisspeicher (ES) oder im Schieberegister (SR).
- Inf_{1B}: erste weitere zwischengespeicherte Information im weiteren Ergebnisspeicher (ES_{B}) oder im weiteren Schieberegister (SR_{B}).
- Inf_{jB}: j-te weitere zwischengespeicherte Information im weiteren Ergebnisspeicher (ES_{B}) oder im weiteren Schieberegister (SR_{B}).
- Inf_{mB}: m-te weitere zwischengespeicherte Information im weiteren Ergebnisspeicher (ES_{B}) oder im weiteren Schieberegister (SR_{B}).
- MSG: Botschaften, dies das erste Stimulierungsmittel (QSTM) als Teil des Watchdog (WDG) an den Prozessor (PC) sendet, die dieser dann mit Antworten (ANS) in vorgesehenen Zeiträumen (b) und mit erwarteten Inhalten und in richtiger Anzahl beantworten soll, was dann durch den Watchdog (WDG) geprüft werden kann.
- n: Anzahl der zwischengespeicherten Informationen (Inf₁ bis Infₙ), die der Ergebnisspeicher (ES) bzw. das Schieberegister (SR) enthält.
- NO: Zählwert. Er gibt hier beispielhaft die Zahl der als korrekt bewerteten und in dem Ergebnisspeicher abgelegten "korrekt"-Bewertungen an.
- m: Anzahl der (weiteren) zwischengespeicherten Informationen (Inf_{1B} bis Inf_{mB}), die der weitere Ergebnisspeicher (ES_{B}) bzw. das weitere Schieberegister (SR_{B}) enthält.
- PC: Prozessor
- p₁: erste Ergebnisspeicherposition bzw. erste Schieberegisterposition der ersten Ergebnisspeicherzelle bzw. der ersten Schieberegisterzelle.
- pⱼ: j-te Ergebnisspeicherposition bzw. j-te Schieberegisterposition der j-ten Ergebnisspeicherzelle bzw. der j-ten Schieberegisterzelle.
- pₙ: n-te Ergebnisspeicherposition bzw. n-te Schieberegisterposition der n-ten Ergebnisspeicherzelle bzw. der n-ten Schieberegisterzelle.
- p_{1B}: erste Ergebnisspeicherposition bzw. erste Schieberregisterposition der ersten Ergebnisspeicherzelle des weiteren Ergebnisspeichers bzw. der ersten Schieberegisterzelle des weiteren Schieberegisters.
- p_{jB}: j-te Ergebnisspeicherposition bzw. j-te Schieberegisterposition der j-ten Ergebnisspeicherzelle bzw. der j-ten Schieberegisterzelle.
- p_{mB}: m-te Ergebnisspeicherposition bzw. m-te Schieberegisterposition der m-ten Ergebnisspeicherzelle bzw. der m-ten Schieberegisterzelle.
- q: Anzahl der aufeinanderfolgenden vorbestimmten Empfangszeiträume (b), nach deren Ende der Bewertungsinhalt des Ergebnisspeichers (ES) bzw. des Schieberegisters (SR) zumindest in Form der ersten Anteile der in diesem Ergebnisspeicher (ES) bzw. in diesem Schieberegisters (SR) zwischengespeicherten Informationen (Inf₁ bis Infₙ) auf einen Wert entsprechend "korrekt" bzw. "nicht korrekt" gesetzt wird, was einer Rücksetzoperation des Ergebnisspeichers (ES) bzw. des Schieberegisters (SR) entspricht. Vorzugsweise wird der ganze Ergebnisspeicher (ES) bzw. das ganze Schieberegister (SR) zurückgesetzt.
- P1 bis P26: zeitliche Zeiträume
- QSTM: erste Stimulierungsmittel (QSTM). Die ersten Stimulierungsmittel sind Teil des Watchdog (WDG). Sie senden Botschaften (MSG) vom Watchdog (WDG) an den Prozessor (PC), auf die dieser dann mit Antworten (ANS) zu richtigen Zeitpunkten und mit erwarteten Inhalten und in richtiger Anzahl reagieren soll, was dann durch den Watchdog (WDG) geprüft werden kann.
- RES: Steuersignal, das den Zustand des Prozessors (PC) verändern kann. Typischerweise handelt es sich um ein Rücksetzsignal, das den Prozessor (PC) zwangsweise in einen vordefinierten Zustand versetzt, oder um eine Interrupt-Signal, das den Prozessor (PC) veranlasst, die aktuelle Programmausführung zu unterbrechen und einen vordefinierten Programmabschnitt auszuführen.
- SC: Systemkomponenten
- SR: Schieberegister, das Teil des Watchdog (WDG) ist und Schieberegisterzellen umfasst. Jede Schieberegisterzelle des Schieberegisters ist mit einer Nummer von 1 bis n durchnummeriert. Das bedeutet, dass jede Schieberegisterzelle zum einen eine reale physikalische Schieberegisterzellenposition und zum anderen eine logische Schieberegisterzellenposition aufweist, die mit der realen nicht identisch sein muss. Im Sinne der Erfindung fällt ein Schieberegister unter den Begriff "Ergebnisspeicher" (ES).
- SR_{B}: weiteres Schieberegister, das Teil des Watchdog (WDG) ist und (weitere) Schieberegisterzellen umfasst. Jede (weitere) Schieberegisterzelle des weiteren Schieberegisters ist mit einer Nummer von 1 bis m durchnummeriert. Das bedeutet, dass jede weitere Schieberegisterzelle zum einen eine reale physikalische (weitere) Schieberegisterzellenposition und zum anderen eine logische (weitere) Schieberegisterzellenposition aufweist, die mit der realen nicht identisch sein muss. Im Sinne der Erfindung fällt ein weiteres Schieberegister unter den Begriff "weitere Ergebnisspeicher" (ES_{B}).
- VAL: zweite Bewertungsmittel, die Teil des Watch-Dogs (WD) sind. Sie bewerten die im Ergebnisspeicher (ES) bzw. im Schieberegister (SR) zwischengespeicherten n Informationen (Inf₁ bis Infₙ). Hierbei können die zweiten Bewertungsmittel ggf. auch mehr als nur eine Bewertung erzeugen. Es kann beispielsweise die Zahl der "korrekt"-Informationen in den Ergebnisspeicherzellen des Ergebnisspeichers (ES) bzw. in den Schieberegisterzellen des Schieberegisters (SR) festgestellt und mit einem Schwellwert verglichen werden. Liegt die Zahl unter dem Schwellwert, so kann beispielsweise das Steuersignal (RES) oder ein anderes entsprechendes Signal zur Beeinflussung des Prozessors (PC) oder von Teilen desselben oder von sonstigen Systemkomponenten (SC) gesetzt werden. Auch können weitere Signale als Ergebnis weiterer Bewertungen erzeugt werden, denen beispielsweise bestimmte Muster in den Ergebnisspeicherzellen des Ergebnisspeichers (ES) bzw. in den Schieberegisterzellen des Schieberegisters (SR) zu Grunde liegen.
- VAL_{B}: weitere zweite Bewertungsmittel, die Teil des Watch-Dogs (WD) sind. Sie bewerten die im weiteren Schieberegister (SR_{B}) zwischengespeicherten m weiteren Informationen (Inf_{1B} bis Inf_{mB}). Hierbei können die Bewertungsmittel mehr als nur eine Bewertung erzeugen. Es kann beispielsweise die weitere Zahl der "korrekt"-Informationen in den (weiteren) Ergebnisspeicherzellen des weiteren Ergebnisspeichers (ES_{B}) bzw. in den (weiteren) Schieberegisterzellen des weiteren Schieberegisters (SR_{B}) festgestellt und mit einem weiteren Schwellwert verglichen werden. Liegt diese weitere Zahl unter diesem weiteren Schwellwert, so kann beispielsweise das Steuersignal (RES) oder ein anderes entsprechendes Signal zur Beeinflussung des Prozessors (PC) oder von Teilen desselben oder von sonstigen Systemkomponenten (SC) gesetzt werden. Auch können weitere Signale als Ergebnis (weiterer) Bewertungen erzeugt werden, denen beispielsweise bestimmte Muster in den (weiteren) Ergebnisspeicherzellen des weiteren Ergebnisspeichers (ES_{B}) bzw. (weiteren) Schieberegisterzellen des weiteren Schieberegisters (SR_{B}) zu Grunde liegen.
- WD: Fenstersignal. In den Beispielen soll ein 1-Pegel bedeuten, dass keine Antworten (ANS) erwartet werden und dass Antworten (ANS) des Prozessors (PC) in diesen Zeiträumen mit einem 1-Pegel unabhängig von deren Inhalt als "nicht korrekt" bewertet werden. In einem Zeitraum mit einem 0-Pegel des Signals werden Antworten (ANS) vorzugsweise in vorgegebener Anzahl erwartet. Sofern deren Inhalte korrekt sind, also einem vorausbestimmbaren Inhalt entsprechen, werden diese als "korrekt bewertet". Ggf. kann eine abweichende Anzahl von Antworten (ANS) auch zu einer "nicht korrekt" Bewertung führen.
- WDG: Watchdog
- WRN: erstes Warnsignal des Watchdog (WDG) an den Prozessor (PC).
- WRN2: zweites Warnsignal des Watchdog (WDG) an den Prozessor (PC).

## Patentansprüche

1. Verfahren zur Überwachung eines Prozessors (PC) mittels eines Watchdog (WDG) mit einem Taktgeber (CTR), einem Ergebnisspeicher (ES) mit n Ergebnisspeicherzellen, wobei n eine ganze positive Zahl größer 1 ist, einem ersten Stimulierungsmittel (QSTM) zum Aussenden von Botschaften (MSG) vom Watchdog (WDG) an den Prozessor (PC) einem ersten Bewertungsmittel (AVAL) zur Bewertung von Antworten des Prozessors (PC), die dieser auf die Botschaften des Watchdog (WDG) an diesen sendet und mit einem zweiten Bewertungsmittel (VAL) zur Bewertung zwischengespeicherter Informationen (Inf₁ bis Infₙ) des Ergebnisspeichers (ES), wobei bei dem Verfahren
- n Informationen (Inf₁ bis Infₙ) in die n Ergebnisspeicherzellen des Ergebnisspeichers (ES) zwischengespeichert werden, wobei die n zwischengespeicherten Informationen (Inf₁ bis Infₙ) von 1 bis n durchnummeriert sind, wobei jeder der n zwischengespeicherten Informationen (Inf₁ bis Infₙ) einer Ergebnisspeicherposition von n Ergebnisspeicherpositionen zugeordnet ist, die von 1 bis n durchnummeriert sind, und wobei jede der n zwischengespeicherten Informationen (Inf₁ bis Infₙ) zumindest einen ersten Informationsanteil aufweist,
- der Watchdog (WDG) an den Prozessor (PC) Botschaften (MSG) sendet, die den Prozessor (PC) selbst und weitere Systemkomponenten (SC) betreffen können,
- der Prozessor (PC) in Abhängigkeit von diesen Botschaften (MSG) Antworten (ANS) an den Watchdog (WDG) sendet,
- der Watchdog (WDG) mittels des ersten Bewertungsmittels (AVAL) die Antwort (ANS) des Prozessors (PC) als "korrekt" oder "nicht korrekt" bewertet,
- wobei eine Antwort (ANS) "korrekt" ist,
- wenn deren Inhalt mit mindestens einem möglichen erwarteten Inhalt übereinstimmt und
- wenn die Antwort (ANS) innerhalb eines vorbestimmten Empfangszeitraums (b) durch den Watchdog (WDG) empfangen wird, und
- wobei eine Antwort (ANS) "nicht korrekt" ist,
- wenn der Inhalt der Antwort (ANS) nicht mit mindestens einem möglichen erwarteten Inhalt übereinstimmt oder
- wenn die Antwort (ANS) nicht in dem vorbestimmten Empfangszeitraum (b) durch den Watchdog (WDG) empfangen wird, und
- in dem Ergebnisspeicher (ES) nach dem Ende eines vorbestimmten Empfangszeitraums (b) oder nach dem Ende jedes vorbestimmten Empfangszeitraums (b) oder nach dem Ende mehrerer vorbestimmter Empfangszeiträume (b)
- eine zwischengespeicherte Information (z.B. Infⱼ) auf der j-ten Ergebnisspeicherposition in einer Ergebnisspeicherzelle des Ergebnisspeichers (ES) aus diesem Ergebnisspeicher (ES) gelöscht wird, wobei 1≤j≤n ist,
- die verbleibenden [n-1] zwischengespeicherten Informationen (Infₖ), wobei 1≤k≤n und k≠j ist, von der jeweiligen k-ten Ergebnisspeicherposition (pₖ, mit 1≤k≤m und k≠j) auf eine andere Ergebnisspeicherposition (p_{k'}, mit k'≠k und 1≤k'≤n) jeweils verschoben wird und
- zumindest als neuen ersten Anteil der j'-ten zwischengespeicherten Information (z.B. Inf_{j'}) auf der Ergebnisspeicherposition, in die keine der verbleibenden (n-1) zwischengespeicherten Informationen (Inf₁ bis Infₙ) verschoben wurde, zumindest das Ergebnis der Bewertung der vor dem besagten Ende des oder der besagten Empfangszeiträume (b) empfangenen Antwort (ANS) oder Antworten (ANS) des Prozessors (PC) entsprechend einem Wert für "korrekt" oder für "nicht korrekt" verwendet wird,
- wobei das zweite Bewertungsmittel (VAL) dann, wenn die zwischengespeicherten Informationen der n zwischengespeicherten Informationen (Inf₁ bis Infₙ) in den Ergebnisspeicherzellen des Ergebnisspeichers (ES) ein zu erkennendes vorbestimmtes Muster aufweisen, zumindest ein Steuersignal (RES), das den Zustand des Prozessors (PC) verändern kann, oder ein Signal erzeugt, aus dem ein solches Steuersignal (RES) abgeleitet wird.

2. Verfahren nach Anspruch 1, **dadurch gekennzeichnet,**
- **dass** einer ersten erwarteten Antwort (ANS1) durch das erste Bewertungsmittel (AVAL) als Zeitraum für den Empfang der ersten Antwort (ANS1) ein vorbestimmter erster Empfangszeitraum (b1) zugeordnet wird und
- **dass** einer zweiten erwarteten Antwort (ANS2) durch das erste Bewertungsmittel (AVAL) als Zeitraum für den Empfang der zweiten Antwort (ANS2) ein vorbestimmter zweiter Empfangszeitraum (b2) zugeordnet wird,
- wobei der vorbestimmte erste Empfangszeitraum (b1) und der vorbestimmte zweite Empfangszeitraum (b2) verschieden sind und sich überlappen oder nicht überlappen,
- wobei der vorbestimmte erste Empfangszeitraum (b1) für die Bewertung der zweiten Antwort (ANS2) keine Wirkung hat und
- wobei der vorbestimmte zweite Empfangszeitraum (b2) für die Bewertung der ersten Antwort (ANS1) keine Wirkung hat.

3. Verfahren nach Anspruch 1 oder 2, **dadurch gekennzeichnet,**
- **dass** der Watchdog (WDG) mittels des ersten Bewertungsmittels (AVAL) die Antwort (ANS) des Prozessors (PC) als "korrekt" oder als "nicht korrekt" bewertet,
- wobei eine Antwort (ANS) dann "korrekt" ist, wenn zusätzlich gilt,
- **dass** die Anzahl der durch den Watchdog (WDG) empfangenen Antworten (ANS) innerhalb des vorbestimmten Empfangszeitraums (b) durch die empfangene Antwort (ANS) eine vorgegebene maximale Anzahl von zu empfangenen Antworten (ANS) nicht überschreitet oder am Ende des vorbestimmten Empfangszeitraums (b) eine vorgegebene minimale Anzahl von zu empfangenen Antworten (ANS) nicht unterschreitet, und
- wobei eine Antwort (ANS) dann "nicht korrekt" ist, wenn alternativ gilt,
- **dass** die Anzahl der durch den Watchdog (WDG) empfangenen Antworten (ANS) innerhalb des jeweils vorbestimmten Empfangszeitraums (b) eine vorgegebene maximale Anzahl von zu empfangenen Antworten (ANS) überschreitet oder eine vorgegebene minimale Anzahl von zu empfangenen Antworten (ANS) unterschreitet.

4. Verfahren nach einem der Ansprüche 1 bis 3, **dadurch gekennzeichnet, dass** die Bewertung der Antwort (ANS) des Prozessors (PC) durch das erste Bewertungsmittel (AVAL) des Watchdog (WDG) zusätzlich von zumindest einer zwischengespeicherten Information (Infⱼ) der zwischengespeicherten Informationen (Infⱼ bis Infₙ) des Ergebnisspeichers (ES) abhängt.

5. Verfahren nach einem der Ansprüche 1 bis 4, **dadurch gekennzeichnet, dass** die Bewertung der Antwort (ANS) des Prozessors (PC) durch das erste Bewertungsmittel (AVAL) des Watchdog (WDG) zusätzlich von den zwischengespeicherten Informationen (Infⱼ bis Infₙ) des Ergebnisspeichers (ES) abhängt.

6. Verfahren nach Anspruch 1, **dadurch gekennzeichnet, dass** der Prozessor (PC) ein zweites Bewertungsmittel (VAL) aufweist, wobei das zweite Bewertungsmittel (VAL) in Abhängigkeit von zumindest einer zwischengespeicherten Informationen (Infⱼ) der zwischengespeicherten Informationen (Inf₁ bis Infₙ) des Ergebnisspeichers (ES) zusätzlich zumindest eine weitere Bewertung erzeugt und wobei zumindest eine zwischengespeicherte Information (Infⱼ) der zwischengespeicherten Informationen (Infⱼ bis Infₙ) des Ergebnisspeichers (ES) eine zwischenzuspeichernde weitere Bewertung des zweiten Bewertungsmittels (VAL) als weiteren Informationsanteil neben dem besagten ersten Informationsanteil zusätzlich umfasst.

7. Verfahren nach einem der Ansprüche 1 bis 6, **dadurch gekennzeichnet, dass** der Watchdog (WDG) zusätzlich versehen ist mit
- einem zweiten Bewertungsmittel (VAL) zur Bewertung zumindest von zwei der n zwischengespeicherten Informationen (Inf₁ bis Infₙ) des Ergebnisspeichers (ES),
- mindestens einem weiteren Ergebnisspeicher (ES_{B}) mit m Ergebnisspeicherzellen zur Speicherung von m weiteren zwischenzuspeichernden Informationen (Inf_{1B} bis Inf_{mB}), wobei m eine ganze positive Zahl größer 1 ist, und
- einem weiteren Bewertungsmittel (VAL_{B}) zur Bewertung der weiteren zwischengespeicherten Informationen (Inf_{1B} bis Inf_{mB}),
- wobei die m weiteren zwischengespeicherten Informationen (Inf_{1B} bis Inf_{mB}) von 1 bis m durchnummeriert sind,
- wobei jeder der m weiteren zwischengespeicherten Informationen (Inf_{1B} bis Inf_{mB}) eine Ergebnisspeicherposition von m Ergebnisspeicherpositionen des weiteren Ergebnisspeichers (ES_{B}) zugeordnet ist, die von 1 bis m durchnummeriert sind,
- wobei jede der m weiteren zwischengespeicherten Informationen (Inf_{1B} bis Inf_{mB}) zumindest einen ersten Informationsanteil aufweist,
- wobei bei jedem Empfang einer Antwort des Prozessors (PC) im weiteren Ergebnisspeicher (ES_{B})
- die j-te weitere zwischengespeicherte Information (Inf_{jB}) auf der j-ten Ergebnisspeicherposition in einer Ergebnisspeicherzelle des weiteren Ergebnisspeichers (ES_{B}) aus dem weiteren Ergebnisspeicher (ES_{B}) gelöscht wird, wobei 1≤j≤m ist,
- jede der [m-1] zwischengespeicherten Informationen (Inf_{kB}), wobei 1≤k≤m und k≠j ist, von der jeweiligen k-ten Ergebnisspeicherposition (pₖ, mit 1≤k≤m und k≠j) des weiteren Ergebnisspeichers (ES_{B}) auf eine andere Ergebnisspeicherposition (p_{k'}, mit k'≠k und 1≤k'≤m) des weiteren Ergebnisspeichers (ES_{B}) verschoben wird und
- zumindest als neuer erster Anteil der j'-ten weiteren zwischengespeicherten Information (Inf_{j'B}) oder als neue j'-te weitere zwischengespeicherte Information (Inf_{j'B}) auf der Ergebnisspeicherposition des weiteren Ergebnisspeichers (ES_{B}), in die keine der verbleibenden [m-1] zwischengespeicherten weiteren Informationen verschoben wurde, zumindest das Ergebnis der weiteren Bewertung der zweiten Bewertungsmittel (VAL) verwendet, und
- wobei das weitere Bewertungsmittel (VAL_{B}) in Abhängigkeit von weiteren zwischengespeicherten Informationen der m weiteren zwischengespeicherten Informationen (Inf_{1B} bis Inf_{mB}) des weiteren Ergebnisspeichers (ES_{B}) ein Steuersignal (RES) erzeugt, das den Zustand des Prozessors (PC) verändern kann oder ein Signal erzeugt, aus denen ein solches Steuersignal (RES) abgeleitet wird.

8. Verfahren nach einem der Ansprüche 1 bis 6, **dadurch gekennzeichnet, dass** der Watchdog (WDG) zusätzlich versehen ist mit einem zweiten Bewertungsmittel (VAL), das in Abhängigkeit vom Auftreten vorbestimmter Muster unter zumindest jeweils eines Informationsanteils zumindest zweier verschiedener zwischengespeicherter Informationen (Infⱼ, Infₖ, mit 1≤j≤n und 1≤k≤n und j≠k) der zwischengespeicherten Informationen (Inf₁ bis Infₙ) des Ergebnisspeichers (ES) zusätzlich zumindest eine zweite weitere Bewertung erzeugt.

9. Verfahren nach einem der Ansprüche 1 bis 8, **dadurch gekennzeichnet, dass** die ersten Informationsanteile der zwischengespeicherten Informationen (Inf₁ bis Infₙ) des Ergebnisspeichers (ES) am Ende des vorbestimmten Empfangszeitraums (b) auf einen Wert entsprechend "nicht korrekt" gesetzt werden.

10. Verfahren nach einem der Ansprüche 1 bis 8, **dadurch gekennzeichnet, dass** die ersten Informationsanteile der zwischengespeicherten Informationen (Inf₁ bis Infₙ) des Ergebnisspeichers (ES) am Ende des vorbestimmten Empfangszeitraums (b) auf einen Wert entsprechend "korrekt" gesetzt werden.

11. Verfahren nach einem der Ansprüche 1 bis 5, **dadurch gekennzeichnet, dass** der Watchdog (WDG) zusätzlich versehen ist mit
- einem zweiten Bewertungsmittel (VAL) zur Bewertung der n zwischengespeicherten Informationen (Inf₁ bis Infₙ) des Ergebnisspeichers (ES),
- mindestens einem weiteren Ergebnisspeicher (ES_{B}) mit m Ergebnisspeicherzellen zur Speicherung von m weiteren zwischenzuspeichernden Informationen (Inf_{1B} bis Inf_{mB}), wobei m eine ganze positive Zahl größer 1 ist, und
- einem weiteren Bewertungsmittel (VAL_{B}) zur Bewertung der weiteren zwischengespeicherten Informationen (Inf_{1B} bis Inf_{mB}),
- wobei die m weiteren zwischengespeicherten Informationen (Inf_{1B} bis Inf_{mB}) von 1 bis m durchnummeriert sind,
- wobei jede der m weiteren zwischengespeicherten Informationen (Inf_{1B} bis Inf_{mB}) eine Ergebnisspeicherposition von m Ergebnisspeicherpositionen des weiteren Ergebnisspeichers (ES_{B}) zugeordnet ist, die von 1 bis m durchnummeriert sind,
- wobei jede der m weiteren zwischengespeicherten Informationen (Inf_{1B} bis Inf_{mB}) zumindest einen ersten Informationsanteil aufweist,
- wobei im weiteren Ergebnisspeicher (ES_{B}) nach dem Ende eines Empfangszeitraums (b) oder nach dem Ende jedes Empfangszeitraums (b) oder nach dem Ende einer vorbestimmten Anzahl q von aufeinanderfolgenden Empfangszeiträumen (b)
- die j-te weitere zwischengespeicherte Information (Inf_{jB}) auf der j-ten Ergebnisspeicherposition in einer Ergebnisspeicherzelle des weiteren Ergebnisspeichers (ES_{B}) aus dem weiteren Ergebnisspeicher (ES_{B}) gelöscht wird, wobei 1≤j≤m ist,
- jede der [m-1] zwischengespeicherten Informationen (Inf_{kB}), wobei 1≤k≤m und k≠j ist, von der jeweiligen k-ten Ergebnisspeicherposition (pₖ, mit 1≤k≤m und k≠j) des weiteren Ergebnisspeichers (ES_{B}) auf eine andere Ergebnisspeicherposition (p_{k'}, mit k'≠k und 1≤k'≤m) des weiteren Ergebnisspeichers (ES_{B}) verschoben wird und
- zumindest als neuer erster Anteil der j'-ten weiteren zwischengespeicherten Information (Inf_{j'B}) oder als neue j'-te weitere zwischengespeicherte Information (Inf_{j'B}) auf der Ergebnisspeicherposition des weiteren Ergebnisspeichers (ES_{B}), in die keine der verbleibenden (m-1) zwischengespeicherten weiteren Informationen verschoben wurde, in Abhängigkeit von der bis zum besagten Ende des oder der besagten Empfangszeiträume (b) empfangenen Antwort oder Antworten zumindest das Ergebnis der weiteren Bewertung der zweiten Bewertungsmittel (VAL) verwendet und
- wobei die weiteren Bewertungsmittel (VAL_{B}) in Abhängigkeit von weiteren zwischengespeicherten Informationen der m weiteren zwischengespeicherten Informationen (Inf_{1B} bis Inf_{mB}) des weiteren Ergebnisspeichers (ES_{B}) ein Steuersignal (RES) erzeugen, das den Zustand des Prozessors (PC) verändern kann.

12. Verfahren nach Anspruch 11, **dadurch gekennzeichnet, dass** die ersten Informationsanteile der zwischengespeicherten Informationen (Inf₁ bis Infₙ) des Ergebnisspeichers (ES) nach dem Ende einer Anzahl von q aufeinanderfolgenden Empfangszeiträumen (b) auf einen Wert entsprechend "nicht korrekt" gesetzt werden.

13. Verfahren nach Anspruch 11, **dadurch gekennzeichnet, dass** die ersten Informationsanteile der zwischengespeicherten Informationen (Inf₁ bis Infₙ) des Ergebnisspeichers (ES) nach dem Ende einer Anzahl von q aufeinanderfolgenden Empfangszeiträumen (b) auf einen Wert entsprechend "korrekt" gesetzt werden.

14. Verfahren nach einem der Ansprüche 1 bis 13, **dadurch gekennzeichnet, dass** der Watchdog (WDG) als Ergebnisspeicher (ES) und, sofern vorhanden, als weiteren Ergebnisspeicher (ES_{B}) ein Schieberegister (SR) bzw. ein weiteres Schieberegister (SR_{B}) aufweist.

## Claims

1. Method for monitoring a processor (PC) by means of a watchdog (WDG) comprising a clock generator (CTR), a result memory (ES) having n result memory cells, wherein n is a positive integral number larger than 1, a first stimulating means (QSTM) for transmission of messages (MSG) from the watchdog (WDG) to the processor (PC), a first evaluation means (AVAL) for evaluation of answers of the processor (PC) which are transmitted by the processor to the watchdog (WDG) in response to messages of the watchdog (WDG) and a second evaluation means (AVAL) for evaluation of buffered information items (Inf₁ to Infₙ) of the result memory (ES), wherein, in the method
- n information items (Inf₁ to Infₙ) are buffered into the n result memory cells of the result memory (ES), wherein the n buffered information items (Inf₁ to Infₙ) are continuously numbered from 1 to n, wherein each of the n buffered information items (Inf₁ to Infₙ) is assigned to a result memory position of n result memory positions which are continuously numbered from 1 to n, and wherein each of the n buffered information items (Inf₁ to Infₙ) comprises at least one first information portion,
- the watchdog (WDG) is operative to transmit messages (MSG) to the processor (PC) that can pertain to the processor (PC) itself and to further system components (SC),
- the processor (PC) is operative to transmit answers (ANS) to the watchdog (WDG) depending on these messages (MSG),
- the watchdog (WDG) is operative, by means of the first evaluation means (AVAL), to assess the answer (ANS) of the processor (PC) as "correct" or "not correct",
- wherein an answer (ANS) is "correct"
- if its content coincides with at least one possible expected content, and
- if the answer (ANS) is received by the watchdog (WDG) within a predetermined reception time period (b), and
- wherein an answer (ANS) is "not correct"
- if the content of the answer (ANS) does not coincide with at least one possible expected content, and
- if the answer (ANS) is not received by the watchdog (WDG) within the predetermined reception time period (b), and
- in the result memory (ES), after the end of a predetermined reception time period (b) or after the end of each predetermined reception time period (b) or after the end of a plurality of predetermined reception time periods (b),
- a buffered information item (e.g. Infⱼ) at the j-th result memory position in a result memory cell of the result memory (ES) is deleted from this result memory (ES), wherein 1≤j≤n,
- the remaining [n-1] buffered information items (Infₖ), wherein 1≤j≤n and k≠j, are respectively shifted from the respective k-th result memory position (pₖ, with 1≤j≤m and k≠j) to another result memory position (p_{k'}, with k'≠j and 1≤k'≤m), and
- at least as a new first portion of the j'-th buffered information item (e.g. Inf_{j'}) at the result memory position into which none of the remaining [n-1] buffered information items (Inf₁ to Infₙ) has been shifted, there is used at least the result of the evaluation of the received answer (ANS) of the processor (PC) in correspondence to a value for "correct" or for "not correct",
- wherein the second evaluation means (AVAL), depending on buffered information items of the n buffered information items (Inf₁ to Infₙ) in the result memory cells of the result memory (ES), generates at least one control signal (RES) adapted to change the state of the processor (PC), or generates a signal from which such a control signal (RES) is derived.

2. Method according to claim 1, **characterized in**
- **that** to a first expected answer (ANS1), there is assigned, by the first evaluation means (AVAL), a predetermined first reception time period (b1) as a time period for reception of the first answer (ANS), and
- **that** to a second expected answer (ANS2), there is assigned, by the first evaluation means (AVAL), a predetermined second reception time period (b2) as a time period for reception of the second answer (ANS2),
- wherein the predetermined first reception time period (b1) and the predetermined second reception time period (b2) are different and overlap each other or do not overlap each other,
- wherein the predetermined first reception time period (b1) has no effect for the evaluation of the second answer (ANS2), and
- wherein the predetermined second reception time period (b2) has no effect for the evaluation of the first answer (ANS1).

3. Method according to claim 1 or 2, **characterized in**
- **that** the watchdog (WDG) is operative, by means of the first evaluation means (AVAL), to assess the answer (ANS) of the processor (PC) as "correct" or "not correct",
- wherein an answer (ANS) is "correct" if it additionally applies
- **that**, within the predetermined reception time period (b), the number of answers (ANS) received by the watchdog (WDG) does not exceed, due to the received answer (ANS), a predetermined maximal number of to-be-received answers (ANS) or, at the end of the predetermined reception time period (b), does not fall short of a predetermined minimal number of to-be-received answers (ANS), and
- wherein an answer (ANS) is "not correct" if it alternatively applies
- **that**, within the respective predetermined reception time period (b), the number of the answers (ANS) received by the watchdog (WDG) exceeds a predetermined maximal number of to-be-received answers (ANS) or falls short of a predetermined minimal number of to-be-received answers (ANS).

4. Method according to any one of claims 1 to 3, **characterized in that** the evaluation of the answer (ANS) of the processor (PC) by the first evaluation means (AVAL) of the watchdog (WDG) is additionally depending on at least one buffered information item (Infⱼ) of the buffered information items (Inf₁ to Infₙ) of the result memory (ES).

5. Method according to any one of claims 1 to 4, **characterized in that** the evaluation of the answer (ANS) of the processor (PC) by the first evaluation means (AVAL) of the watchdog (WDG) is additionally depending on the buffered information items (Infi to Infₙ) of the result memory (ES).

6. Method according to claim 1, **characterized in that** the processor (PC) comprises a second evaluation means (VAL), wherein the second evaluation means (VAL) is operative, depending on at least one buffered information item (Infⱼ) of the buffered information items (Inf₁ to Infₙ) of the result memory (ES), to additionally generate at least one further evaluation, and wherein at least one buffered information item (Infⱼ) of the buffered information items (Inf₁ to Infₙ) of the result memory (ES) additionally comprises a to-be-buffered further evaluation of the second evaluation means (VAL) as a further information portion in addition to said first information portion.

7. Method according to any one of claims 1 to 6, **characterized in that** the watchdog (WDG) is additionally provided with
- a second evaluation means (VAL) for evaluation of at least two of the n buffered information items (Inf₁ to Infₙ) of the result memory (ES),
- at least one further result memory (ES_{B}) having m result memory cells for storage of m further to-be-buffered information items (Inf_{1B} to Inf_{mB}), wherein m is a positive integral number larger than 1, and
- a further evaluation means (VAL_{B}) for evaluation of the further buffered information items (Inf_{1B} to Inf_{mB}),
- wherein the m further buffered information items (Inf_{1B} to Inf_{mB}) are continuously numbered from 1 to m,
- wherein each of the m further buffered information items (Inf_{1B} to Inf_{mB}) is assigned to a result memory position of m result memory positions of the further result memory (ES_{B}) which are continuously numbered from 1 to m,
- wherein each of the m further buffered information items (Inf_{1B} to Inf_{mB}) comprises at least one information portion,
- wherein, in the further result memory (ES_{B}), upon each reception of an answer of the processor (PC),
- the j-th further buffered information item (Inf_{jB}) at the j-th result memory position in a result memory cell of the further result memory (ES_{B}) is deleted from the further result memory (ES_{B}), wherein 1≤j≤m,
- each of the remaining [m-1] buffered information items (Inf_{kB}), wherein 1≤j≤m and k≠j, is shifted from the respective k-th result memory position (pₖ, with 1≤j≤m and k≠j) of the further result memory (ES_{B}) to another result memory position (p_{k'}, with k'≠k and 1≤k'≤m) of the further result memory (ES_{B}), and
- at least as a new first portion of the j'-th buffered information item (Inf_{j'B}) at the result memory position of the further result memory (ES_{B}) into which none of the remaining [m-1] buffered further information items has been shifted, there is used at least the result of the further evaluation of the second evaluation means (VAL), and
- wherein the further evaluation means (VAL_{B}), depending on further buffered information items of the m further buffered information items (Inf_{1B} to Inf_{mB}) of the further result memory (ES_{B}), generates a control signal (RES) adapted to change the state of the processor (PC), or generates a signal from which such a control signal (RES) is derived.

8. Method according to any one of claims 1 to 6, **characterized in that** the watchdog (WDG) is additionally provided with a second evaluation means (VAL) which is operative, depending on the occurrence of predetermined patterns among at least respectively one information portion of at least two different buffered information items (Infⱼ, Infₖ, with 1≤j≤n and 1≤k≤n and k≠j) of the buffered information items (Inf₁ to Infₙ) of the result memory (ES), to generate at least one further evaluation.

9. Method according to any one of claims 1 to 8, **characterized in that**, at the end of the predetermined reception time period (b), the first information portions of the buffered information items (Inf₁ to Infₙ) of the result memory (ES) are set to a value corresponding to "not correct".

10. Method according to any one of claims 1 to 8, **characterized in that**, at the end of the predetermined reception time period (b), the first information portions of the buffered information items (Inf₁ to Infₙ) of the result memory (ES) are set to a value corresponding to "correct".

11. Method according to any one of claims 1 to 5, **characterized in that** the watchdog (WDG) is additionally provided with
- a second evaluation means (VAL) for evaluation of the n buffered information items (Inf₁ to Infₙ) of the result memory (ES),
- at least one further result memory (ES_{B}) having m result memory cells for storage of m further to-be-buffered information items (Inf_{1B} to Inf_{mB}), wherein m is a positive integral number larger than 1, and
- a further evaluation means (VAL_{B}) for evaluation of the further buffered information items (Inf_{1B} to Inf_{mB}),
- wherein the m further buffered information items (Inf_{1B} to Inf_{mB}) are continuously numbered from 1 to m,
- wherein each of the m further buffered information items (Inf_{1B} to Inf_{mB}) is assigned to a result memory position of m result memory positions of the further result memory (ES_{B}) which are continuously numbered from 1 to m,
- wherein each of the m further buffered information items (Inf_{1B} to Inf_{mB}) comprises at least one information portion,
- wherein, in the further result memory (ES_{B}), after the end of a reception time period (b) or after the end of each reception time period (b) or after the end of a predetermined number q of successive reception time periods (b),
- the j-th further buffered information item (Inf_{jB}) at the j-th result memory position in a result memory cell of the further result memory (ES_{B}) is deleted from the further result memory (ES_{B}), wherein 1≤j≤m,
- each of the [m-1] buffered information items (Inf_{kB}), wherein 1≤j≤m and k≠j, is shifted from the respective k-th result memory position (pₖ, with 1≤j≤m and k≠j) of the further result memory (ES_{B}) to another result memory position (p_{k'}, with k'≠k and 1≤k'≤m) of the further result memory (ES_{B}), and
- at least as a new first portion of the j'-th further buffered information item (Inf_{j'B}) or as a new j'-th further buffered information item (Inf_{j'B}) at the result memory position of the further result memory (ES_{B}) into which none of the remaining [m-1] buffered further information items has been shifted, there is used at least the result of the further evaluation of the second evaluation means (VAL) depending on the answer or the answers received up to said end or said reception time periods (b), and
- wherein the further evaluation means (VAL_{B}), depending on further buffered information items of the m further buffered information items (Inf_{1B} to Inf_{mB}) of the further result memory (ES_{B}), generate a control signal (RES) adapted to change the state of the processor (PC).

12. Method according to claim 11, **characterized in that**, after the end of a number q of successive reception time periods (b), the first information portions of the buffered information items (Inf₁ to Infₙ) of the result memory (ES) are set to a value corresponding to "not correct".

13. Method according to claim 11, **characterized in that**, after the end of a number q of successive reception time periods (b), the first information portions of the buffered information items (Inf₁ to Infₙ) of the result memory (ES) are set to a value corresponding to "correct".

14. Method according to any one of claims 1 to 13, **characterized in that** the watchdog (WDG) comprises, as a result memory (ES) or, if provided, as a further result memory (ES_{B}), a shift register (SR) and respectively a further shift register (SR_{B}).

## Revendications

1. Procédé destiné à la surveillance d'un processeur (PC) au moyen d'un chien de garde (WDG) doté d'une horloge (CTR), d'une mémoire de résultats (ES) avec n cellules de mémoire de résultats, n étant un nombre entier positif supérieur à 1, d'un premier moyen de stimulation (QSTM) destiné à l'émission de messages (MSG) du chien de garde (WDG) au processeur (PC), d'un premier moyen d'évaluation (AVAL) destiné à l'évaluation de réponses que le processeur (PC) envoie au chien de garde (WDG) suite aux messages de ce dernier, et d'un deuxième moyen d'évaluation (VAL) destiné à l'évaluation d'informations mises en mémoire tampon (Inf₁ à Infₙ) de la mémoire de résultats (ES), procédé dans lequel
- n informations (Inf₁ à Infₙ), numérotées 1 à n, sont mises en mémoire tampon dans les n cellules de mémoire de résultats de la mémoire de résultats (ES), chacune des n informations (Inf₁ à Infₙ) mises en mémoire tampon étant associée à une position de mémoire de résultats parmi n positions de mémoire de résultats, numérotées de 1 à n, et chacune des n informations (Inf₁ à Infₙ) mises en mémoire tampon comportant au moins une première partie d'information,
- le chien de garde (WDG) envoie au processeur (PC) des messages (MSG) pouvant concerner le processeur (PC) lui-même et d'autres composants systèmes (SC),
- le processeur (PC) envoie des réponses (ANS) au chien de garde (WDG) en fonction de ces messages (MSG),
- le chien de garde (WDG) évalue comme « correcte » ou « incorrecte » la réponse (ANS) du processeur (PC) au moyen du premier moyen d'évaluation (AVAL),
- une réponse (ANS) étant « correcte »
- lorsque le contenu de celle-ci coïncide avec au moins un contenu attendu possible et
- lorsque la réponse (ANS) est reçue par le chien de garde (WDG) à l'intérieur d'une période de réception (b) prédéterminée, et
- une réponse étant « incorrecte »
- lorsque le contenu de la réponse (ANS) ne coïncide pas avec au moins un contenu attendu possible ou
- lorsque la réponse (ANS) n'est pas reçue par le chien de garde (WDG) à l'intérieur de la période de réception (b) prédéterminée, et
- dans la mémoire de résultats (ES), après la fin d'une période de réception prédéterminée (b) ou après la fin de chaque période de réception prédéterminée (b) ou après la fin de plusieurs périodes de réception prédéterminées (b)
- une information mise en mémoire tampon (p. ex. Infⱼ) sur la j-ième position de mémoire de résultats dans une cellule de mémoire de résultats de la mémoire de résultats (ES) est effacée de cette mémoire de résultats (ES), avec 1 ≤ j ≤ n,
- les [n-1] informations mises en mémoire tampon restantes (Infₖ), avec 1 ≤ k ≤ n et k ≠ j, sont respectivement déplacées de la k-ième position de mémoire de résultats (pₖ, avec 1 ≤ k ≤ m et k ≠ j) respective à une autre position de mémoire de résultats (p_{k'}, avec k' ≠ k et 1 ≤ k' ≤n) et
- au moins le résultat de l'évaluation de la réponse (ANS) ou des réponses (ANS) reçues du processeur (PC) avant ladite fin de ladite ou desdites périodes de réception (b) correspondant à une valeur pour « correcte » ou pour « incorrecte » est utilisé au moins en tant que nouvelle première partie de la j'-ième information mise en mémoire tampon (p. ex. Inf_{j'}) à la position de mémoire de résultats où aucune des (n-1) informations mises en mémoire tampon restantes (Inf₁ à Infₙ) n'a été déplacée,
- lorsque les informations mises en mémoire tampon des n informations mises en mémoire tampon (Inf₁ à Infₙ) dans les cellules de mémoire de résultats de la mémoire de résultats (ES) présentent un motif prédéterminé à reconnaître, le deuxième moyen d'évaluation (VAL) génère ensuite au moins un signal de commande (RES) pouvant modifier l'état du processeur (PC), ou un signal duquel est dérivé un tel signal de commande (RES).

2. Procédé selon la revendication 1, **caractérisé en ce que**
- une première période de réception prédéterminée (b1) est associée à une première réponse attendue (ANS1) par le premier moyen d'évaluation (AVAL) en tant que période pour la réception de la première réponse (ANS1) et **en ce que**
- une deuxième période de réception prédéterminée (b2) est associée à une deuxième réponse attendue (ANS2) par le premier moyen d'évaluation (AVAL) en tant que période pour la réception de la deuxième réponse (ANS2),
- la première période de réception prédéterminée (b1) et la deuxième période de réception prédéterminée (b2) étant différentes, se chevauchant ou non,
- la première période de réception prédéterminée (b1) n'ayant pas d'effet pour l'évaluation de la deuxième réponse (ANS2) et
- la deuxième période de réception prédéterminée (b2) n'ayant pas d'effet pour l'évaluation de la première réponse (ANS1).

3. Procédé selon la revendication 1 ou 2, **caractérisé en ce que**
- le chien de garde (WDG) évalue comme « correcte » ou comme « incorrecte » la réponse (ANS) du processeur (PC) au moyen du premier moyen d'évaluation (AVAL),
- une réponse étant ensuite « correcte » lorsqu'en outre
- le nombre de réponses (ANS) reçues par le chien de garde (WDG) à l'intérieur de la période de réception prédéterminée (b) ne dépasse pas, du fait de la réponse reçue (ANS), un nombre maximal prédéfini de réponses (ANS) à recevoir, ou n'est pas inférieur à un nombre minimal prédéfini de réponses (ANS) à recevoir à la fin de la période de réception prédéterminée (b), et
- dans lequel une réponse (ANS) est ensuite « incorrecte » lorsque, alternativement,
- le nombre de réponses (ANS) reçues par le chien de garde (WDG) à l'intérieur de la période de réception prédéterminée respective (b) dépasse un nombre maximal prédéfini de réponses (ANS) à recevoir ou est inférieur à un nombre minimal prédéfini de réponses (ANS) à recevoir.

4. Procédé selon l'une des revendications 1 à 3, **caractérisé en ce que** l'évaluation de la réponse (ANS) du processeur (PC) par le premier moyen d'évaluation (AVAL) du chien de garde (WDG) dépend en outre d'au moins une information mise en mémoire tampon (Infⱼ) des informations mises en mémoire tampon (Infⱼ à Infₙ) de la mémoire de résultats (ES).

5. Procédé selon l'une des revendications 1 à 4, **caractérisé en ce que** l'évaluation de la réponse (ANS) du processeur (PC) par le premier moyen d'évaluation (AVAL) du chien de garde (WDG) dépend en outre des informations mises en mémoire tampon (Infⱼ à Infₙ) de la mémoire de résultats (ES).

6. Procédé selon la revendication 1, **caractérisé en ce que** le processeur (PC) comporte un deuxième moyen d'évaluation (VAL), le deuxième moyen d'évaluation (VAL) générant en outre au moins une évaluation supplémentaire en fonction d'au moins une information mise en mémoire tampon (Infⱼ) des informations mises en mémoire tampon (Inf₁ à Infₙ) de la mémoire de résultats (ES), et au moins une information mise en mémoire tampon (Infⱼ) des informations mises en mémoire tampon (Inf₁ à Infₙ) de la mémoire de résultats (ES) comprenant en outre une évaluation supplémentaire, à mettre en mémoire tampon, du deuxième moyen d'évaluation (VAL) comme autre partie d'information en plus de ladite première partie d'information.

7. Procédé selon l'une des revendications 1 à 6, **caractérisé en ce que** le chien de garde (WDG) est en outre doté
- d'un deuxième moyen d'évaluation (VAL) destiné à l'évaluation d'au moins deux des n informations mises en mémoire tampon (Inf₁ à Infₙ) de la mémoire de résultats (ES),
- d'au moins une autre mémoire de résultats (ES_{B}) avec m cellules de mémoire de résultats pour mémoriser m informations à mettre en mémoire tampon (Inf_{1B} à Inf_{mB}), m étant un nombre entier positif supérieur à 1, et
- d'un autre moyen d'évaluation (VAL_{B}) destiné à l'évaluation des autres informations mises en mémoire tampon (Inf_{1B} à Inf_{mB}),
- les m autres informations mises en mémoire tampon (Inf_{1B} à Inf_{mB}) étant numérotées de 1 à m,
- chacune des m autres informations mises en mémoire tampon (Inf_{1B} à Inf_{mB}) étant associée à une position de mémoire de résultats parmi m positions de l'autre mémoire de résultats (ES_{B}), numérotées de 1 à m,
- chacune des m autres informations mises en mémoire tampon (Inf_{1B} à Inf_{mB}) comportant au moins une première partie d'information,
- procédé dans lequel, à chaque réception d'une réponse du processeur (PC) dans l'autre mémoire de résultats (ESB),
- la j-ième autre information mise en mémoire tampon (Inf_{jB}) sur la j-ième position de mémoire de résultats dans une cellule de mémoire de résultats de l'autre mémoire de résultats (ES_{B}) est effacée de l'autre mémoire de résultats (ES_{B}), avec 1 ≤ j ≤ m,
- les [m-1] informations mises en mémoire tampon (Inf_{kB}), avec 1 ≤ k ≤ m et k ≠ j, sont déplacées chacune de la k-ième position de mémoire de résultats (pₖ, avec 1 ≤ k ≤ m et k ≠ j) respective de l'autre mémoire de résultats (ESB) à une différente position de mémoire de résultats (p_{k'}, avec k'≠k et 1≤k'≤m) de l'autre mémoire de résultats (ES_{B}) et
- au moins le résultat de l'autre évaluation du deuxième moyen d'évaluation (VAL) est utilisé au moins comme nouvelle première partie de la j'-ième autre information mise en mémoire tampon (Inf_{j'B}) ou comme nouvelle j'-ième autre information mise en mémoire tampon (Inf_{j'B}) sur celle des positions de mémoire de résultats de l'autre mémoire de résultats (ES_{B}) où aucune des [m-1] autres informations mise en mémoire tampon n'a été déplacée, et
- en fonction d'autres informations mises en mémoire tampon des m autres informations mises en mémoire tampon (Inf_{1B} à Inf_{mB}) de l'autre mémoire de résultats (ES_{B}), l'autre moyen d'évaluation (VAL_{B}) génère au moins un signal de commande (RES) pouvant modifier l'état du processeur (PC), ou un signal duquel est dérivé un tel signal de commande (RES),

8. Procédé selon l'une des revendications 1 à 6, **caractérisé en ce que** le chien de garde (WDG) est en outre doté d'un deuxième moyen d'évaluation (VAL), lequel génère en outre au moins une deuxième autre évaluation en fonction de l'apparition de motifs prédéterminés entre au moins une partie d'information respective d'au moins deux informations mises en mémoire tampon respectives (Infⱼ, Infk, avec 1 ≤ j ≤ n et 1 ≤ k ≤ n et j ≠ k) des informations mises en mémoire tampon (Inf₁ à Infₙ) de la mémoire de résultats (ES).

9. Procédé selon l'une des revendications 1 à 8, **caractérisé en ce que** les premières parties d'information des informations mises en mémoire tampon (Inf₁ à Infₙ) de la mémoire de résultats (ES) sont fixées sur une valeur correspondant à « incorrect » à la fin de la période de réception prédéterminée (b).

10. Procédé selon l'une des revendications 1 à 8, **caractérisé en ce que** les premières parties d'information des informations mises en mémoire tampon (Inf₁ à Infₙ) de la mémoire de résultats (ES) sont fixées sur une valeur correspondant à « correct » à la fin de la période de réception prédéterminée (b).

11. Procédé selon l'une des revendications 1 à 5, **caractérisé en ce que** le chien de garde (WDG) est en outre doté
- d'un deuxième moyen d'évaluation (VAL) destiné à l'évaluation des n informations mises en mémoire tampon (Inf₁ à Infₙ) de la mémoire de résultats (ES),
- d'au moins une autre mémoire de résultats (ES_{B}) avec m cellules de mémoire de résultats destinées à mémoriser m autres informations à mettre en mémoire tampon (Inf_{1B} à Inf_{mB}), m étant un nombre entier positif supérieur à 1, et
- d'un autre moyen d'évaluation (VAL_{B}) destiné à l'évaluation des autres informations mises en mémoire tampon (Inf_{1B} à Inf_{mB}),
- les m autres informations mises en mémoire tampon (Inf_{1B} à Inf_{mB}) étant numérotées de 1 à m,
- chacune des m autres informations mises en mémoire tampon (Inf_{1B} à Inf_{mB}) étant associée à une position de mémoire de résultats parmi m positions de l'autre mémoire de résultats (ES_{B}), numérotées de 1 à m,
- chacune des m autres informations mises en mémoire tampon (Inf_{1B} à Inf_{mB}) comportant au moins une première partie d'information,
- procédé dans lequel, dans l'autre mémoire de résultats (ES_{B}), après la fin d'une période de réception (b) ou après la fin de chaque période de réception (b) ou après la fin d'un nombre prédéterminé q de périodes de réception consécutives (b) :
- la j-ième autre information mise en mémoire tampon (Inf_{jB}) sur la j-ième position de mémoire de résultats dans une cellule de mémoire de résultats de l'autre mémoire de résultats (ES_{B}), est effacée de l'autre mémoire de résultats (ES_{B}), avec 1 ≤ j ≤ m,
- les [m-1] informations mises en mémoire tampon (Inf_{kB}), avec 1 ≤ k ≤ m et k ≠ j, sont déplacées chacune de la k-ième position de mémoire de résultats (pₖ, avec 1 ≤ k ≤ m et k ≠ j) respective de l'autre mémoire de résultats (ES_{B}) à une différente position de mémoire de résultats (p_{k'}, avec k' ≠ k et 1 ≤ k' ≤ m) de l'autre mémoire de résultats (ES_{B}) et
- en fonction de la ou des réponse (s) reçue (s) jusqu'à ladite fin de ladite ou desdites période(s) de réception (b), au moins le résultat de l'autre évaluation du deuxième moyen d'évaluation (VAL) est utilisé au moins comme nouvelle première partie de la j'-ième autre information mise en mémoire tampon (Inf_{j'B}) ou comme nouvelle j'-ième autre information mise en mémoire tampon (Inf_{j'B}) sur celle des positions de mémoire de résultats de l'autre mémoire de résultats (ES_{B}) où aucune des (m-1) autres informations mises en mémoire tampon n'a été déplacée, et
- en fonction d'autres informations mises en mémoire tampon des m autres informations mises en mémoire tampon (Inf_{1B} à Inf_{mB}) de l'autre mémoire de résultats (ES_{B}), les autres moyens d'évaluation (VAL_{B}) génèrent au moins un signal de commande (RES) pouvant modifier l'état du processeur (PC).

12. Procédé selon la revendication 11, **caractérisé en ce que** les premières parties d'information des informations mises en mémoire tampon (Inf₁ à Infₙ) de la mémoire de résultats (ES) sont fixées sur une valeur correspondant à « incorrect » après la fin d'un nombre q de périodes de réceptions consécutives (b) .

13. Procédé selon la revendication 11, **caractérisé en ce que** les premières parties d'information des informations mises en mémoire tampon (Inf₁ à Infₙ) de la mémoire de résultats (ES) sont fixées sur une valeur correspondant à « correct » après la fin d'un nombre q de périodes de réceptions consécutives (b).

14. Procédé selon l'une des revendications 1 à 13, **caractérisé en ce que** le chien de garde (WDG) comporte en tant que mémoire de résultats (ES) et, le cas échéant, en tant qu'autre mémoire de résultats (ES_{B}), un registre à décalage (SR) et respectivement un autre registre à décalage (SR_{B}).
